(19) **Europäisches Patentamt / European Patent Office / Office européen des brevets**

(11) **EP 1 570 001 B1**

(12) ## EUROPEAN PATENT SPECIFICATION

(45) Date of publication and mention
of the grant of the patent:
**11.11.2009 Bulletin 2009/46**

(21) Application number: **03786872.6**

(22) Date of filing: **18.11.2003**

(51) Int Cl.:
***C08L 69/00*** (2006.01)

(86) International application number:
**PCT/US2003/037006**

(87) International publication number:
**WO 2004/052991 (24.06.2004 Gazette 2004/26)**

(54) **HIGH FLOW ENGINEERING THERMOPLASTIC COMPOSITIONS AND PRODUCTS MADE THEREFROM**

THERMOPLASTISCHE BAUHARZZUSAMMENSETZUNG MIT HOHEM DURCHFLUSS UND DARAUS HERGESTELLTE PRODUKTE

COMPOSITIONS THERMOPLASTIQUES D'INGENIERIE A ECOULEMENT ELEVE ET PRODUITS CONCUS A PARTIR DE CELLES-CI

(84) Designated Contracting States:
**AT BE BG CH CY CZ DE DK EE ES FI FR GB GR HU IE IT LI LU MC NL PT RO SE SI SK TR**

(30) Priority: **10.12.2002 US 432269 P**

(43) Date of publication of application:
**07.09.2005 Bulletin 2005/36**

(73) Proprietor: **BASF CORPORATION**
**Florham Park, NJ 07932 (US)**

(72) Inventors:
• **DEETER, Gary, A.**
**Racine, WI 53402 (US)**
• **GREELEY, Thomas J.**
**Racine, WI 53406 (US)**
• **VILLALOBOS, Marco, A.**
**Lindenhurst, IL 60046 (US)**

(74) Representative: **Ruschke, Hans Edvard et al**
**RUSCHKE HARTMANN MADGWICK & SEIDE**
**Patent- und Rechtsanwälte**
**Postfach 86 06 29**
**81633 München (DE)**

(56) References cited:
**US-A- 4 740 553**

• **DATABASE WPI Section Ch, Week 200034 Derwent Publications Ltd., London, GB; Class A18, AN 2000-390139 XP002276330 & JP 2000 129135 A (SANYO CHEM IND LTD), 9 May 2000 (2000-05-09)**
• **DATABASE WPI Section Ch, Week 198950 Derwent Publications Ltd., London, GB; Class A18, AN 1989-366552 XP002276331 & JP 01 186312 A (ARON KASEI KK), 25 July 1989 (1989-07-25)**

Remarks:
The file contains technical information submitted after the application was filed and not included in this specification

**Description**

**CROSS-REFERENCE TO RELATED APPLICATIONS:** This is a formal application which claims priority of Provisional Patent Application No. 60/432,269, filed December 10, 2002.

**FIELD OF THE INVENTION**

The present invention relates to flow modified thermoplastic compositions for molding applications made from thermoplastic polymers and low molecular weight vinyl aromatic/(meth)acrylate polymeric modifiers.

**BACKGROUND OF THE INVENTION**

Thermoplastics and thermoplastic blends for use in various engineering applications should exhibit a variety of favorable physical properties such as high heat resistance, high impact strength, high moldability and processability, and in some instances, good transparency. Polycarbonates, polyamides, polyesters and polyethers among other engineering thermoplastics are particularly popular components due to their toughness and relatively high softening temperatures. These favorable mechanical, and thermal properties, as well as their good electrical properties make these resins widely applicable for engineering plastics in various fields, including the field of housings for electronic equipment and automobile parts. Due to their relatively poor melt flow characteristics, however, polycarbonates and other engineering plastics, are often blended with one or more additional polymers and additives to improve their melt flow properties. Generally, previous attempts to improve the melt flow characteristics of engineering thermoplastics have involved incorporating lower melting substances and/or less expensive polymers with lower melt viscosity into the thermoplastic. Unfortunately, the resulting blends generally exhibit improved melt flow characteristics at the expense of other valuable features, such as, impact strength and heat resistance. This tradeoff is unacceptable, particularly when the thermoplastic materials are used as moldings for housings for electronics which require thin walls, as well as high impact strength and heat resistance.

According to JP 01/186312 A, it is known to prepare molded products having a two-layer structure by using two different thermoplastic synthetic resins which do not form a mixture. According to the process described therein, a first synthetic resin layer is formed by injecting a thermoplastic synthetic resin A into an injection mold, and a second synthetic resin layer is formed on a phase of the first synthetic resin layer by injecting a thermoplastic synthetic resin B.

US 4,740,553 discloses thermoplastic resin compositions having an improved environmental stress cracking resistance. The thermoplastic resin compositions are composed of a mixture comprising 5 to 94 wt% of an elastomer-containing styrene resin, from 5 to 94 wt% of a polycarbonate resin, and from 0.1 to 20 wt% of an acrylate polymer.

JP 2000-129135 A discloses resin compositions which comprise two polymers (A) and (B) in a specific weight ratio. Polymer (A) is a hydrophilic polymer on polyether ester amide basis. Polymer (B) is a hydrophobic thermoplastic polymer on polyacrylate or polystyrene basis.

Thus, a need exists for a thermoplastic composition that exhibits increased moldability and processability while retaining other desirable physical properties such as high heat resistance and impact strength.

**SUMMARY OF THE INVENTION**

The present invention makes use of low molecular weight, vinyl aromatic/(meth)acrylate polymers as flow enhancers for thermoplastics and thermoplastic blends to provide thermoplastic compositions with improved moldability and flowability for molding applications, while maintaining a good balance of impact and heat resistance. The thermoplastic compositions of the present invention are suitable for molding opaque and transparent housings for electronic devices, automobile parts, appliances, and other articles, particularly those exposed to high shear during molding. Typical applications are large molded parts or molded parts with thin walls, such as housings for mobile phones, laptop computers, personal computer CPU's and monitors, and other electronic devices, and housings for automobile control and indicator panels, mirrors, headlamps, etc. The compositions ensure excellent fluidity and moldability, and excellent surface appearance as well as high mechanical, thermal, and impact properties, without the incidence of delamination or additive juicing, and in some cases, without detriment to the transparency of the composition.

One aspect of the present invention provides a high flow thermoplastic composition made from a host polymer and a flow modifier polymer as defined in claim 1. Preferred embodments have an R.E.D. of less than 1.75. Additionally, in Preferred embodiments the weight average molecular weight of the flow modifier is less than 10,000. Highly preferred embodiments include flow modifiers having a weight average molecular weight of 5,000.

The host polymer is present in an amount of from 50 to 99 weight percent and the flow modifier polymer is present in an amount of from 1 to 20 weight percent.

Preferably, flow modifier polymer comprises (b1) 1-99 % of a (meth)acrylate monomer, (b2) 99-1% of at least one vinyl aromatic monomer, and (b3) 0-99% of another monomer or mix of monomers able to copolymerize with (b1) and (b2). Preferred embodiments include a flow modifier polymer comprising from 1 to 70 weight percent of at least one (meth)acrylate monomer and from 30 to 99 weight percent of at least one vinyl aromatic monomer.

Preferably, the composition is a transparent composition having a haze percentage that differs by less than about 1 % from the haze percentage of the host polymer.

Preferably, the composition further comprises at least one additive wherein the additive is an impact modifier, a mineral filler, a pigment, a dye, or a fire retardant.

Preferably, the at least one vinyl aromatic monomer is styrene or a styrene derivative and the at least one (meth)acrylate monomer is selected from the group consisting of butyl methacrylate, methyl methacrylate, glycidyl methacrylate, butyl acrylate, 2-ethylhexyl acrylate, ethyl acrylate, acrylic acid and maleic anhydride.

One non-limiting example of a suitable composition according to the present invention contains (A) 50-99 % of an engineering thermoplastic chosen from the families of polycarbonates (PCs), polycarbonate/acrylonitrile-butadiene-styrene (PC/ABS) blends, polyesters and polyester based blends, polyamides and polyamide based blends, polyphenylene ether (PPE) based blends and transparent ABS, (B) 1- 20 % of a low molecular weight polymer obtained by polymerizing (b1) 1-99 % of a (meth)acrylate monomer, (b2) 99-1% of at least one vinyl aromatic monomer, and (b3) 0-99% of other monomer or mix of monomers able to copolymerize with (b1) and (b2), (C) 0-20% of an impact modifier, (D) 0-50% of a mineral filler or reinforcing agent, (E) 0-10% of a suitable pigment or dye, and (F) 0-25% of a fire retardant or mix of fire retardant agents.

Another aspect of the invention provides a method as defined in claim 18 for increasing the flow of a host polymer by mixing therewith a flow modifier polymer having a weight average molecular weight ($M_w$) of less than 15; 000. Again, the flow modifier polymer is made from at least one (meth)acrylate monomer and at least one vinyl aromatic monomer and the relative energy difference between the flow modifier and host polymer is less than 2.2.

Still another aspect of this invention provides a molded article as defined in claim 15.

Another aspect of this invention provides a method for manufacture of a molded article wherein the article is an automobile part or a housing for a piece of electronic equipment. The article may also be a housing for a computer, a computer monitor, a keyboard, a printer, a fax machine, a telephone, a mobile communications device, such as a mobile phone, a camera, a power plug, an electrical switch, an electrical connector, an electrical control panel, a telecommunication connector, a telecommunication switch, an automobile control panel, an automobile indicator panel, a mount for a mirror, an automobile headlamp, an automotive bumper, automotive fascia, an automotive hood, an engine cover, a generator cover, a battery cover, an air manifold, automotive hoses and connectors, a tractor hood, an automotive panel, a tractor panel, a lawn mower deck, a lawn tool, a piece of office equipment, including a photocopier, a tray for a photocopier, household electronics, such as coffee makers, irons, vacuum cleaners, and fans, large appliances, such as televisions, DVD players, refrigerators, washing machines, and dryers; or parts for a computer, a computer monitor, a keyboard, a printer, a fax machine, a telephone, a mobile communications device, such as a mobile phone, a camera, a power plug, an electrical switch, an electrical connector, in electrical control panel, a telecommunication connector, a telecommunication switch, an automobile control panel, an automobile indicator panel, a mount for a mirror, an automobile headlamp, an automotive bumper, automotive fascia, an automotive hood, an engine cover, a generator cover, a battery cover, an air manifold, automotive hoses and connectors, a tractor hood, an automotive panel, a tractor panel, a lawn mower deck, a lawn tool, a piece of office equipment, including a photocopier, a tray for a photocopier, household electronics, such as coffee makers, irons, vacuum cleaners, and fans, large appliances, such as televisions, DVD players, refrigerators, washing machines, and dryers.

Preferably, the modifier polymer is substantially free of acrylonitrile.

In a preferred embodiment of the method for processing a high flow thermoplastic composition, the mixing and molding steps are carried out at shear rates in excess of 100,000 sec$^{-1}$. Alternative methods can be carried out at shear rates in excess of 300,000 sec$^{-1}$ or 500,000 sec$^{-1}$.

## DETAILED DESCRIPTION OF THE INVENTION

A first aspect of the invention provides a high flow thermoplastic composition made from a host polymer blended with a low molecular weight vinyl aromatic/(meth)acrylate flow modifier polymer.

The invention is based on the inventors' discovery that low $M_w$ vinyl aromatic/(meth)acrylate resins may be used as flow enhancers in engineering thermoplastic compositions, providing such compositions with improved moldability (a.k.a. flowability) for injection molding applications, particularly those exposed to very high shear rates. Very high shear rates greater than 10,000s$^{-1}$ are included. Very high shear rates also include shear rates greater than 50,000s$^{-1}$, shear rates greater than 100,000s$^{-1}$, shear rates greater than 200,000s$^{-1}$, shear rates greater than 300,000s$^{-1}$, shear rates greater than 400,000s$^{-1}$, shear rates greater than 500,000s$^{-1}$, and shear rates greater than 1,000,000$^{-1}$. Molded products made from the modified thermoplastics maintain a good balance of impact, mechanical, and heat resistance properties without delamination, additive juicing or blooming problems or detriment to the transparency when applicable.

The thermoplastic compositions are useful for housings for electronics and automobile parts which require thinner and thinner walls without losing a satisfactory balance of mechanical, impact and thermal properties, and transparency when required. Additionally, molding thin walled or large intricate parts requires minimization of the viscosity, and thus the shear rates in the mold, by employing extreme temperature conditions. The flow modifiers of this invention provide formulations with much lower melt viscosity at given temperatures than other presently available flow modifiers. This provides decreased shear rates and stresses during the molding process and/or allows for lower temperature molding, thus offering energy cost savings.

Without wishing or intending to be bound to any particular theory of the invention, the inventors believe the superior performance of the flow modifiers (FMs) may be explained by their very high compatibility and/or miscibility with the host polymers. Compatibility and/or miscibility are controlled in this invention by optimizing the intermolecular interactions between the flow modifiers and the host polymers. These interactions include but are not limited to Van der Waals forces, including London Dispersion forces and dipole-dipole interactions, and/or hydrogen bonding. A flow modifier having a combination of suitably high intermolecular interactions with a given host polymer and a suitably low molecular weight appears to provide the key to optimizing the compatibility. This high compatibility with the host polymer is believed to allow the flow modifiers to maximize the flow and minimize the melt viscosity of the composition while minimizing adverse effects on thermal, mechanical, and impact properties. It is likely also that this high compatibility prevents delamination, blooming, juicing and other phase separation effects common in the art of high temperature and high shear rate molding. The high compatibility is further believed to be responsible for the high transparency observed in the transparent compositions of this invention even when sizeable refractive index (R.I.) mismatches exist between the transparent host polymer and the flow modifiers.

The flow modifier polymers are low molecular weight polymers made by polymerizing at least one (meth)acrylate monomer and at least one vinyl aromatic monomer, A low molecular weight flow modifier polymer may be any flow modifier polymer having a sufficiently low molecular weight to act as a flow enhancer, in some instances without having a substantial negative effect on the mechanical properties, such as impact strength and heat resistance, of the resulting thermoplastic composition. According to the invention, the flow modifiers are polymers having a $M_w$, as measured using gel permeation chromatography, of less than 15,000. Thus, low molecular weight flow modifier polymers also include polymers having a $M_w$ of less than 10,000, polymers having a $M_w$ of less than 9,000, polymers having a $M_w$ of less than 8,000, polymers having a $M_w$ of less than 7,000, polymers having a $M_w$ of less than 6,000, polymers having a $M_w$ of less than 5,000, polymers having a $M_w$ of less than 4,000, polymers having a $M_w$ of less than 3,000, polymers having a $M_w$ of less than 2,000, polymers having a $M_w$ of less than 1,000, and polymers having a $M_w$ of less than 500.

In addition to possessing low molecular weights, due to their monomer compositions these flow modifiers are also substantially compatible with the host polymers. One method of determining the compatibility of a given blend is by calculating the solubility parameter differences between the flow modifiers and host plastics as described in the Polymer Handbook, 4th Ed., pp. 675 - 688 and Hansen Solubility Parameters - A Users Handbook, C. M. Hansen, CRC Press, 2000, pp. 1 - 13, which is incorporated herein by reference. The solubility parameter difference is defined as:

$$R_{ij} = [4(\delta_{Di} - \delta_{Dj})^2 + (\delta_{Pi} - \delta_{Pj})^2 + (\delta_{Hi} - \delta_{Hj})^2]^{0.5}$$

where i refers to the flow modifier, j refers to the host plastic, $\delta_D$ refers to dispersion solubility parameter, $\delta_P$ to the polar solubility parameter, and $\delta_H$ to the hydrogen bonding solubility parameter.

In general, the mechanical properties of the thermoplastic compositions are maximized and the adverse affects of delamination, blooming, juicing and other phase-separation type problems are minimized by decreasing the solubility parameter differences between host polymer and flow modifier. A very good measure of compatibility is determined by the Relative Energy Difference (R.E.D. number) between the flow modifiers and the host plastics as defined in Hansen Solubility Parameters - A Users Handbook, C. M. Hansen, CRC Press, 2000, pp. 1 - 13. The R.E.D. number is defined as:

$$R.E.D. = R_{ij}/R_o$$

where $R_o$ is the radius of interaction for the host plastic as defined in Hansen Solubility Parameters - A Users Handbook, C. M. Hansen, CRC Press, 2000, pp. 1 - 13. In general, the mechanical properties of the thermoplastic compositions are maximized and the adverse affects of delamination, blooming, juicing and other phase-separation type problems are minimized by decreasing the R.E.D. number. Thus, in various embodiments, the compositions may have a R.E.D. number of less than about 2.2. Preferably the R.E.D. number is less than 1.75. This includes embodiments where the R.E.D. number is less than about 1.0, less than about 0.8, less than about 0.6, or even less than about 0.5.

The improved flow characteristics of the modified thermoplastic compositions may be shown by the increase in the melt flow index (MFI) of the modified host polymer (i.e. the host polymer plus the flow modifier polymer) as compared to the melt flow index of the unmodified host polymer. The MFI provides a measure of the rate of extrusion of a thermoplastic through an orifice at a prescribed temperature and load. The ASTM D-1238 test for MFI provides a common and standardized test for measuring the MFI for a given specimen. Although the amount of the flow modifier added to the host polymers will vary widely depending on such factors as the nature of the host plastic and the flow modifier, and the intended application of the final product, according to the invention, the flow modifiers will be present in an amount sufficient to increase the MFI, as measured by ASTM D-1238, of the modified thermoplastic (i.e. the host polymer plus the flow modifier polymer) as compared to the unmodified thermoplastic by at least 5 %. This includes embodiments where the MFT, as measured by ASTM D-1238, is increased by at least 10 %, at least 20 %, at least 30 %, at least 40 %, and at least 50 %. In various embodiments, the high flow thermoplastic compositions will contain from about 1 to about 20 weight percent of the flow modifier polymer. This includes compositions that contain from about 1 to about 10 weigh percent of the flow modifier polymer, and compositions that contain from about 1 to about 5 weigh percent of the flow modifier polymer.

An advantage of the flow modifiers of this invention is that they provide improved flowability, and therefore processability, without sacrificing impact strength or heat resistance. This may be demonstrated by the high impact strengths of the modified thermoplastic compositions and the products made therefrom. The impact strength of a material is simply a measure of the amount of energy required to break a specimen of the material. The ASTM D-256 test for impact strength provides a common and standardized test for measuring the impact strength of a notched specimen (i.e. the "notched impact strength"). The notched impact strength of the modified thermoplastics of this invention may vary depending on a variety of factors, including the nature of the host plastic and the flow modifier, as well as the intended application for the modified thermoplastic itself and processing conditions. However, according to the invention, the modified host polymers and the compositions made therefrom demonstrate a notched impact strength which is changed when compared to the unmodified host plastic by as little as -40%. This includes embodiments where the impact resistance, measured according to ASTM D-256 is changed by-30%, -20%, -10%, and 0%. In some embodiments of the invention, the modified host polymers and the compositions made therefrom demonstrate a notched impact strength which is changed when compared to the unmodified host plastic by +40%. This includes embodiments where the impact resistance, measured according to ASTM D-256 is changed by +30%, +20%, +10% and 0%.

The heat resistance of the modified thermoplastic compositions may be measured by the heat deflection temperature (HDT) or by the Vicat Softening temperature (VST) of the compositions. The HDT or VST provides a measure of the temperature at which an arbitrary deformation occurs when a specimen of the material of interest is subjected to a flexural load. The ASTM D-648 test for HDT and VST provides a common and standardized test for measuring the HDT of a specimen. Like the notched impact strength, the HDT or VST of the modified thermoplastics of this invention may vary depending on a variety of factors, including the nature of the host plastic and the flow modifier, as well as the intended application for the modified thermoplastic itself and processing conditions. However, according to the invention, the modified host polymer and compositions made therefrom demonstrate an HDT or VST, measured according to ASTM D-648 which is changed when compared to the unmodified host plastic by as little as -10°C. This includes embodiments where the HDT, measured according to ASTM D-648 is changed by - 7°C, -5°C, -2°C, and 0°C. In some embodiments of the invention, the modified host polymers demonstrate an HDT or VST, measured according to ASTM D-648 which is changed when compared to the unmodified host plastic by up to +10°C. This includes embodiments where the HDT, measured according to ASTM D-648 is changed by +7°C, +5°C, +2°C, and 0°C.

In certain applications it is desirable to provide transparent thermoplastic compositions. Unlike many of the flow enhancers currently available, the flow enhancers of the present invention do not significantly degrade the transparency of transparent thermoplastic host polymers, such as polycarbonates, transparent polyesters, and transparent ABS resins. Thus, high flow transparent thermoplastics may be achieved when starting with transparent engineering thermoplastics and adding the low molecular weight flow agents. The transparency of the flow modified thermoplastics may be measured by the haze of the material. Haze is a measure of the scattering of light as it passes through a Transparent material. The ASTM D-1003 test for haze provides a common and standardized test for measuring the haze of a specimen. Using the flow modifiers of the present invention in combination with transparent host polymers may provide high flow, transparent thermoplastic compositions having a haze, as measured by ASTM D-1003 which is changed when compared to the haze of the unmodified host plastic by as little as +1.0%. This includes embodiments where the haze, measured according to ASTM D-1003 is changed by +0.7%, +0.5%, +0.2% and 0%. This also includes embodiments where the haze, measured according to ASTM D-1003 is changed by -1.0%, -0.7%, -0.5%, - 0.2% and 0%.

The host polymer may be any engineering thermoplastic or blend of thermoplastics for use in molding applications. Examples of suitable host polymers include, but are not limited to, polycarbonates, polyamides, polyesters, polyphenylene ethers, and transparent ABS resins. Due to their favorable mechanical properties, polycarbonates or blends of polycarbonates with elastomeric graft polymer resins, such as acrylonitrile-butadiene-styrene (ABS) resins, are particularly suitable host polymers.

Polycarbonate host polymers included in the compositions may be any aliphatic or aromatic homopolycarbonate or copolycarbonate known in the art. These polycarbonates may be manufactured according to conventional processes. Thermoplastic aromatic polycarbonates suitable for use in the compositions of the present invention include polycarbonates generally prepared by the reaction of dihydric phenols with a carbonate precursor, such as phosgene or carbonate compounds. Examples of suitable dihydric phenols include, but are not limited to, dihydroxy diphenyls, bis-(hydroxy phenyl)-alkanes, bis-(hydroxy phenyl)-cycloalkanes, bis-(hydroxy phenyl)-sulphides, bis-(hydroxy phenyl)-ethers, bis-(hydroxy phenyl)-ketones, bis-(hydroxy phenyl)-sulfoxides, bis-(hydroxy phenyl)-sulphones, $\alpha,\alpha$-bis-(hydroxy phenyl)-diisopropyl benzenes, and combinations thereof.

Specific examples of suitable dihydric phenols include, but are not limited to, 2,2-bis (4-hydroxyphenyl)propane (bisphenol A), bis (hydroxyaryl) alkanes such as bis (4-hydroxyphenyl)methane, 1,1-bis(4-hydroxyphenyl)ethane, 2,2-bis(4-hydroxyphenyl)butane, 2,2-bis(4-hydroxyphenyl)octane, 2,2-bis(4-hydroxyphenyl)phenylmethane, 2,2-bis(4-hydroxy-1-methylphenyl)propane, bis(4-hydroxyphenyl)naphthylmethane, 1,1-bis(4-hydroxy-t-butylphenyl)propane, 2,2-bis(4-hydroxy-3,5-tetramethylphenyl)propane; bis(hydroxyaryl)cycloalkanes such as 1,1-bis (4-hydroxyphenyl)cyclopentane, 1,1-bis(4-hydroxyphenyl)cyclohexane, 1,1-bis(4-hydroxyphenyl)-3,5,5-trimethylcyclohexane; dihydroxyaryl ethers such as 4,4'-dihydroxyphenyl ether, 4,4'-dihydroxy-3,3'-dimethylphenyl ether; dihydroxydiaryl sulfides such as 4,4'-dihydroxydiphenyl sulfide, 4,4'-dihydroxy-3,3'-dimethyldiphenyl sulfide; dihydroxydiaryl sulfoxides such as 4,4'-dihydroxydiphenyl sulfoxide, 4,4'-dihydroxy-3,3'-dimethyldiphenyl sulfoxide; dihydroxydiaryl sulfones such as 4,4'-dihydroxydiphenyl sulfone, 4,4'-dihydroxy-3,3'-dimethyldiphenyl sulfone; dihydroxydiphenyls such as 4,4'-dihydroxydiphenyl.

ABS resins for use in PC/ABS or transparent-ABS host polymers are well-known in the art. The ABS resins suitable for use in the host polymers are generally formed from a rigid graft polymer grafted to a diene rubber. Typically, the ABS resins have a continuous phase made from styrene and acrylonitrile monomers on a discontinuous elastomer phase based on a butadiene elastomer. In these resins the two phases are generally linked by grafting the styrene/acrylonitrile copolymer onto the polybutadiene. However, the scope of the ABS resins suitable for use in the present invention also encompasses elastomeric resins formed from a monovinylidene aromatic monomer other than styrene and from acrylate or methacrylate monomers rather than or in addition to the acrylonitrile monomer. In addition, the diene rubbers are not limited to butadiene rubbers. The relative proportions of the PC and the ABS in the PC/ABS host polymer blends may vary over a wide range and will depend in part on the intended application of the composition. In one exemplary embodiment, the PC/ABS host polymer blends contain from about 95 to about 50 weight percent PC and from about 5 to about 50 weight percent ABS.

When the flow modified thermoplastic is to be used in a transparent application, transparent-ABS is a particularly suitable host polymer. Conventional transparent ABS resins are rubber-reinforced resins produced by graft-polymerizing methyl methacrylate (MMA), styrene (ST) and acrylonitrile (AN) in the presence of polybutadiene. The MMA/ST/AN terpolymer obtained by the graft polymerization exhibits a refractive index close to that of polybutadiene.

Polyamides are another example of a suitable host polymer for use in the present compositions. Polyamides (PAs) are well known and commercially available. These thermoplastic polymers cover a range of polymers containing recurring amide groups in the main polymer chain. Mixtures of various polyamides, as well as various polyamide copolymers, are also useful as host polymers. The polyamides can be obtained by a number of well known processes such as those described in U.S. Patent Nos. 2,071,250; 2,071,251; 2,130,523; 2,130,948; 2,241,322; 2,312,966; and 2,512,606, which are incorporated herein by reference. Nylon-6, for example, is a polymerization product of caprolactam. Nylon-6,6 is a condensation product of adipic acid and 1,6-diaminohexane. Likewise, nylon 4,6 is a condensation product between adipic acid and 1,4-diaminobutane. Besides adipic acid, other useful diacids for the preparation of nylons include azelaic acid, sebacic acid, dodecane diacid, as well as terephthalic and isophthalic acids, and the like. Other useful diamines include m-xylene diamine, di-(4-aminophenyl)methane, di-(4-aminocyclohexyl)methane; 2,2-di-(4-aminophenyl)propane, 2,2-di-(4-aminocyclohexyl)propane, among others. Copolymers of caprolactam with diacids and diamines are also useful. Examples of polyamides suitable for use in the present invention include, but are not limited to, those polyamides known as PA 6, PA 6,6; PA 6,12; PA 11; PA 12; and PA 6,9.

Polyesters may also be used as the host polymer in the compositions. Polyesters are well known in the art and include a variety of polymers produced through the polycondensation of hydroxycarboxylic acids or dicarboxylic acids with dihydroxy compounds. Polyesters suitable for use in the present invention are thermoplastic polyesters and include all heterochain macromolecular compounds that possess repeat carboxylate ester groups in the backbone of the polymer. Mixtures of various polyesters, as well as various polyester copolymers, are also useful as host polymers. Examples of suitable polyesters include, but are not limited to, poly(butylene terephthalate) (PBT), poly(ethylene terephthalate) (PET), PETG, poly(ethylene-co-cyclohexyldimethanol terephthalate), amorphous polyesters, polyethylene naphthalate (PEN), and poly(propylene terephthalate) (PPT).

Polyphenylene ethers are also suitable for use as the host polymers in the compositions of the present invention. The term polyphenylene ether resin includes unsubstituted polyphenylene ether polymers, substituted polyphenylene ether polymers wherein the aromatic ring is substituted, and blends thereof. Mixtures of various polyphenylene ethers, as well as various polyphenylene copolymers, are also useful as host polymers. Polyphenylene oxide (PPO) is one non-limiting example of a polyphenylene ether.

Blends of two or more of the thermoplastic polymers listed above or blends of the thermoplastic polymers listed above with other polymers may also be used as host polymers. Examples of suitable blends include polycarbonate/ polyester blends, such as PC/PBT, PC/PET blends, blends of polyacrylates with polystyrenes, blends including polyolefins or ABS resins such as polyamide/ABS and polyamide/polyolefines, such as polyethylene, or polypropylene, and blends of polyphenylene ethers with polystyrenes (including high impact polystyrene), or polyamides. When the host polymer is itself a blend of two or more polymers, the weight percentages quoted throughout this specification refer to total weight percentages for the multipolymer blends.

The flow modifiers of the present invention are low molecular weight polymers and copolymers made by polymerizing at least one (meth)acrylate monomer and at least one vinyl aromatic monomer. As used herein, the term (meth)acrylate is intended to indicate both acrylate and methacrylate monomers. It should be noted that while some host polymers, particularly those that include a graft polymer resin, such as ABS, may themselves include both vinyl aromatic and (meth)acrylate monomers, the low molecular weight flow modifiers are distinct components of the compositions of this invention. In particular, the flow modifiers are not diene-based graft polymers or other rubber based polymers.

In preferred embodiments the flow modifier polymer contains from 1 to 99 weight percent (meth)acrylate monomer and from 99 to 1 weigh percent vinyl aromatic monomer. This includes embodiments containing from 1 and 70 weight percent of (meth)acrylate monomers and from 30 to 99 weight percent vinyl aromatic monomers, and further includes embodiments containing from 1 to 80 weight percent (meth)acrylate monomers and from 20 to 99 weight percent vinyl aromatic monomers. In some embodiments the flow modifier polymer also contains from 0 to 99 weight percent of at least one other monomer or a mixture of other monomers capable of polymerizing with the (meth)acrylate monomers and/or the vinyl aromatic monomers. This includes embodiments that contain 1 to 70 weight percent of at least one other monomer or a mixture of other monomers capable of polymerizing with the (meth)acrylate monomers and/or the vinyl aromatic monomers.

Exemplary (meth)acrylate monomers include both functional and non-functional monomers. Suitable acrylate and methacrylate monomers include, but are not limited to, methyl acrylate, ethyl acrylate, n-propyl acrylate, i-propyl acrylate, n-butyl acrylate, s-butyl acrylate, i-butyl acrylate, t-butyl acrylate, n-amyl acrylate, i-amyl acrylate, isobornyl acrylate, n-hexyl acrylate, 2-ethylbutyl acrylate, 2-ethylhexyl acrylate, n-octyl acrylate, n-decyl acrylate, methylcyclohexyl acrylate, cyclopentyl acrylate, cyclohexyl acrylate, methyl methacrylate, ethyl methacrylate, n-propyl methacrylate, n-butyl methacrylate, i-propyl methacrylate, i-butyl methacrylate, n-amyl methacrylate, n-hexyl methacrylate, i-amyl methacrylate, s-butyl-methacrylate, t-butyl methacrylate, 2-ethylbutyl methacrylate, methylcyclohexyl methacrylate, cinnamyl methacrylate, crotyl methacrylate, cyclohexyl methacrylate, cyclopentyl methacrylate, 2-ethoxyethyl methacrylate, and isobornyl methacrylate. Examples of epoxy-functional (meth)acrylate monomers for use in the present invention, include both acrylates and methacrylates. Examples of these monomers include, but are not limited to, those containing 1,2-epoxy groups such as glycidyl acrylate and glycidyl methacrylate. The epoxy-functional monomer glycidyl methacrylate is a particularly suitable monomer. Examples of acid functional monomers include, but are not limited to, acrylic acid and methacrylic acid. Examples of hydroxy functional monomers include, but are not limited to, hydroxyethyl acrylate (HEA) and hydroxyethyl methacrylate (HEMA). Examples of amine functional monomers include, but are not limited to, dimethylaminoethyl methacrylate (DMAEMA) and dimethylaminoethyl acrylate (DMAEA).

Vinyl aromatic monomers include both styrene and styrene derivatives, such as styrene, $\alpha$-methylstyrene, p-methylstyrene, 3,4-dimethylstyrene, o- and p-divinyl benzene, $\alpha$-chlorostyrene, p-chlorostyrene, 2,4-dichlorostyrene and p-chloro-$\alpha$-methylstyrene, o, m or p-bromostyrene, and di-bromostyrene. Vinyl toluene is an additional example of a suitable aromatic monomer for use in the flow modifiers.

In addition to the vinyl aromatic monomers and the (meth)acrylate monomers, the modifier polymer may include other monomers which are able to copolymerize with the aromatic vinyl monomers and the methacrylate monomers. Such additional monomers include, but are not limited to, maleic anhydride, maleic acid and its mono and diesters, fumaric acid and its mono and diesters, vinyl acetate and the esters of vinyl alcohol, $\alpha$-olefines and diene monomers, vinyl chloride, acrylonotrile.

In various embodiments of the invention, the modifier polymer does not include nitrile or acrylonitrile monomers. This is advantageous because many nitrile and acrylonitrile monomers are toxic.

In addition to the host polymer and the modifier polymer, the high-flow thermoplastic compositions may optionally include other additives such as impact modifiers, inorganic or mineral fillers, reinforcing agents, pigments, dyes, and fire retardants.

Impact modifiers for thermoplastic compositions are well known in the art and are commercially available. Examples of impact modifiers include thermoplastic elastomer based modifiers, including acrylic impact modifiers, such as methyl methacrylate-butadiene-styrene (MBS) impact modifiers, styrene-butadiene (SB) impact modifiers, styrene-butadiene-styrene (SBS) impact modifiers, and styreneisoprene-styrene (SIS) impact modifiers.

Inorganic and mineral fillers and reinforcing agents for use in the thermoplastic compositions are well known in the art. These are typically added to thermoplastic resins, such as polycarbonate resins, for the purpose of improving the mechanical strength and/or the durability of the thermoplastic composition. Examples include, but are not limited to, glass fibers, carbon fibers, glass beads, carbon black, calcium sulfate, calcium carbonate, calcium silicate, titanium oxide, alumina silica asbestos, talc, clay mica and quartz powder. In addition, a mixture of any of the above may be used.

A variety of flame retardants for use with thermoplastic compositions are also well known. Perhaps the most popular of these are phosphate and phosphonate based flame retardants. Examples of well-known flame retardants from the prior art include organic phosphate esters such as triphenyl phosphate, tricresyl phosphate, diphenyleresyl phosphate, resorcinol diphenyl phosphate and various other oligomeric phosphates. Tetraflurorethylene polymers are also used in combination with such phosphate esters in order to provide flame retardancy. Many of these phosphorous based flame retardants incidentally act as flow enhancers. Unfortunately, while these phosphate based flame retardants can improve flame retardancy and flow, at high loadings these flame retardants also tend to have a negative effect on the impact strength and heat resistance of the thermoplastic compositions. Thus, one advantage offered by the compositions of the present invention over the compositions of the prior art is that by the using flow modifiers disclosed herein, the amount of phosphate flame retardant may be reduced without sacrificing flame retardancy, impact strength, or heat resistance.

Another advantage of the flow modifiers of the present invention is that they are flame neutral, that is, they neither improve nor decrease the flame retardancy of the compositions. Another advantage of the flow modifiers of the present invention is that they do not increase dripping under UL-94 testing even in the highest flow compositions. Thus, the flow modifiers may be used in either flame retardant or non-flame retardant compositions.

The flow modified thermoplastics of the present invention are well suited for a variety of applications. Examples of products that maybe manufactured from the thermoplastics include, but are not limited to, housings for electronic equipment, business machines, such as computers, monitors, keyboards, printers, fax machines, telephones, notebook and handheld computers, and cameras, power plugs, electrical switches and controls, and telecommunication connectors and switches. In addition, the compositions may be used to make a variety of parts in the automotive industry, including, control and indicator panels, mirrors, headlamps, automotive bumpers and fascia, tractor hoods and panels, lawn mower decks, lawn and garden tool housings, and various other large structural parts.

Another aspect of the invention provides a method for increasing the flow of a host polymer by mixing therewith a flow modifier polymer. Again, the modifier polymer is made from at least one (meth)acrylate monomer and at least one vinyl aromatic monomer. Suitable host polymers and flow modifier polymers are described in detail above.

The low molecular weight flow modifier polymers may by produced according to standard techniques well known in the art. Such techniques include, but are not limited to, continuous bulk polymerization processes, batch, and semi-batch polymerization processes. A production technique that is well suited for the low molecular weight flow modifier polymers is described in US Patent 6,605,681, the entire disclosure of which is incorporated herein by reference. Briefly, this process involves continuously charging into a reactor at least one (meth)acrylate monomer, optionally at least one vinyl aromatic monomer, and optionally one or more other monomers that are polymerizable with the vinyl aromatic and (meth)acrylate monomers. The proportion of monomers charged into the reactor may be the same as those proportions that go into the flow modifier polymers discussed above. The reactor may be charged with from about 1 to about 99 weight percent (meth)acrylate monomer and from about 99 to about 1 weight percent vinyl aromatic monomer. This includes embodiments where the reactor is charged with from about 1 and about 70 weight percent of (meth)acrylate monomers and from about 30 to about 99 weight percent vinyl aromatic monomers, and further includes embodiments where the reactor is charged with from about 1 to about 80 weight percent (meth)acrylate monomers and from about 20 to about 99 weight percent vinyl aromatic monomers. In some embodiments the reactor is also charged with from about 0 to about 99 weight percent of at least one other monomer or a mixture of other monomers capable of polymerizing with the (meth)acrylate monomers and/or the vinyl aromatic monomers. This includes embodiments where the reactor is charged with about 1 to about 70 weight percent of at least one other monomer or a mixture of other monomers capable of polymerizing with the (meth)acrylate monomers and/or the vinyl aromatic monomers.

The reactor may also optionally be charged with at least one free radical polymerization initiator and/or one or more solvents. Examples of suitable initiators and solvents are provided in US patent 6,605,681. Briefly, the initiators suitable for carrying out the process according to the present invention are compounds which decompose thermally into radicals in a first order reaction, although this is not a critical factor. Suitable initiators include those with half-life periods in the radical decomposition process of about 1 hour at temperatures greater or equal to 90°C and further include those with half-life periods in the radical decomposition process of about 10 hours at temperatures greater or equal to 100°C. Others with about 10 hour half-lives at temperatures significantly lower than 100°C may also be used. Suitable initiators are, for example, aliphatic azo compounds such as 1-t-amylazo-1-cyanocyclohexane, azo-bis-isobutyronitrile and 1-t-butylazo-cyanocyclohexane, 2,2'-azo-bis-(2-methyl)butyronitrile and peroxides and hydroperoxides, such as t-butylperoctoate, t-butyl perbenzoate, dicumyl peroxide, di-t-butyl peroxide, t-butyl hydroperoxide, cumene hydroperoxide, di-t-amyl peroxide and the like. Additionally, di-peroxide initiators may be used alone or in combination with other initiators. Such di-peroxide initiators include, but are not limited to, 1,4-bis-(t-butyl peroxycarbo)cyclohexane, 1,3-di(t-butyl peroxy) cyclohexane, and 2,5-di(t-butyl peroxy)hexyne-3, and other similar initiators well known in the art. The initiators are di-t-butyl peroxide and di-t-amyl peroxide are particularly suited for use in the invention.

The initiator may be added with the monomers. The initiators may be added in any appropriate amount, but preferably the total initiators are added in an amount of about 0.0005 to about 0.06 moles initiator(s) per mole of monomers in the feed. For this purpose initiator is either admixed with the monomer feed or added to the process as a separate feed.

The solvent may be fed into the reactor together with the monomers, or in a separate feed. The solvent may be any solvent well known in the art, including those that do not react with the epoxy functionality on the epoxy-functional acrylic monomer(s) at the high temperatures of the continuous process described herein. The proper selection of solvent may decrease the gel particle formation during the continuous, high temperature reaction of the present invention. Such solvents include, but are not limited to, xylene, toluene, ethyl-benzene, Aromatic-100ϑ, Aromatic 150ϑ, Aromatic 200ϑ (all Aromatics available from Exxon), acetone, methylethyl ketone, methyl amyl ketone, methyl-isobutyl ketone, n-methyl pyrrolidinone, and combinations thereof. When used, the solvents are present in any amount desired, taking into account reactor conditions and monomer feed. In one embodiment, one or more solvents are present in an amount of up to 40% by weight, up to 15% by weight in a certain embodiment, based on the total weight of the monomers.

The reactor is maintained at an effective temperature for an effective period of time to cause polymerization of the monomers to produce a polymeric product from the monomers.

The continuous process of the present invention allows for a short residence time within the reactor. The residence time is generally less than one hour, and may be less than 15 minutes. In another embodiment, the residence time is generally less than 30 minutes, and may be less than 20 minutes.

The process of the present invention may be conducted using any type of reactor well-known in the art, in a continuous configuration. Such reactors include, but are not limited to, continuous stirred tank reactors ("CSTRs"), tube reactors, loop reactors, extruder reactors, or any reactor suitable for continuous operation.

A form of CSTR which has been found suitable for carrying out the process is a tank reactor provided with cooling coils and/or cooling jackets sufficient to remove any heat of polymerization not taken up by raising the temperature of the continuously charged monomer composition so as to maintain a preselected temperature for polymerization therein. Such a CSTR may be provided with at least one, and usually more, agitators to provide a well-mixed reaction zone. Such CSTR may be operated at varying filling levels from 20 to 100% full (liquid full reactor LFR). In one embodiment the reactor is more than 50% full but less than 100% full. In another embodiment the reactor is 100% liquid full.

The low molecular weight flow modifier polymers of the present invention possess high thermal stability. Therefore, it is possible to process these polymers at higher temperatures than other flow modifiers. The high thermal stability of the flow modifiers of this invention is related to the fact that the process of the present invention is itself conducted in a continuous process at high temperatures. In one embodiment, the temperatures range from about 180°C to about 350°C, this included embodiments where the temperatures range from about 190°C to about 325°C, and more further included embodiment where the temperatures range from about 200°C to about 300°C. In another embodiment, the temperature may range from about 200°C to about 275°C. Due to their high temperature synthesis the flow modifiers of this invention show high thermal stability when used later in compounding and molding applications in engineering thermoplastic compositions processed at similar temperature ranges. In contrast other flow modifiers presently available undergo degradation and gas evolution at these conditions.

One measure of the thermal stability of the flow modifier polymers is provided by thermogravimetric analysis (TGA). TGA monitors the weight loss of a polymeric specimen as a function of temperature. In various embodiments, the flow modifiers of the present invention are characterized by less than a 10 percent weight loss at the highest processing temperatures utilized in the processing of the modified thermoplastic compositions. This includes embodiments where the weight loss of the flow modifier is less than 5 percent and further includes embodiments where the weight loss of the flow modifier is less than 3 percent at the highest processing temperature for the modified thermoplastic compositions. In some embodiments, the weight loss of the flow modifier is less than 1 percent at the highest processing temperature for the modified thermoplastic compositions. In some embodiments, zero weight loss of the flow modifier is measured at the highest processing temperature for the modified thermoplastic compositions.

The host polymers, the flow modifiers, and any optional ingredients can be blended according to any conventional techniques. For example, the components may be blended in a mixing and compounding apparatus, including, but not limited to, a single or twin screw extruder, mixing roll, ribbon blender or co-kneader. The thermoplastic compositions may be molded by various well-known molding techniques, such as injection molding, blow molding, compression molding, and extrusion molding. In some instances, the highest processing temperature realized during processing of the flow modified thermoplastic compositions will be at least 180°C, and, in some cases, will be from about 180 to about 350°C. This includes instances where the highest processing temperature realized is at least 190°C, and in some cases is from about 190 to about 325°C. In other embodiments the maximum processing temperature is at least 200°C, and may be from about 200 to about 300°C, or even from about 200 to about 275°C.

The invention will be further described with reference to the following non-limiting examples.

## EXAMPLES

Unless otherwise indicated, in what follows, all the exemplified compounding was carried out in a Leistritz 40-mm twin screw co-rotating extruder operating at 250 RPM. Injection Molding of ASTM test specimens was carried out in a Boy 50 injection molding machine with a clamping force of 50 metric tons, fitted with a 28-mm injection screw and a Procan II process monitoring system. Previous to compounding, and then previous to injection molding all thermoplastics and compounds, respectively, were dried according to thermoplastic manufacturer recommendations. Moisture levels were maintained below 0.05% (w/w) before molding.

## I. High Flow Polycarbonate Compositions

### Preparation of Flow Modifiers I:

In order to provide high flow in polycarbonate formulations for injection molding applications, four different styrene-acrylic flow modifiers, labeled FM A-D below, were designed and prepared in a 2 gallon free radical continuous polymerization reactor system according to the teachings of US patent 6,605,681. The specific synthesis conditions and characterization parameters are given in Table 1 below. The abbreviations used below are defined as follows, STY = styrene, BMA = butyl methacrylate, MMA = methyl methacrylate, GMA = glycidyl methacrylate, BA = butyl acrylate, DTBP = di-tertiary butyl peroxide, A-100 = Aromatic 100 solvent (Exxon).

### Table 1. Flow Modifier Preparation I.

|  | Flow Modifier A | Flow Modifier B | Flow Modifier C | Flow Modifier D |
|---|---|---|---|---|
| **Monomer Feed Composition (% of monomer feed)** |  |  |  |  |
| STY | 100 | 80 | 94.4 | 20 |
| BMA | --- | --- | ---- | --- |
| MMA | --- | 20 | ---- | --- |
| GMA | --- | --- | 5.6 | --- |
| BA | --- | --- | --- | 80 |
| **Other Ingredients (% of total mix)** |  |  |  |  |
| Aromatic 100 | --- | 8 | 8 | 12.8 |
| DTBP | 0.5 | 2 | 2 | 0.2 |
| **Reaction Conditions** |  |  |  |  |
| Reaction Temp (°C) | 273 | 232 | 240 | 199 |
| Residence Time (min) | 12 | 12 | 12 | 12 |
| **Flow Modifier Characteristics** |  |  |  |  |
| Mn[a] | 1,400 | 1,390 | 1,480 | 4,000 |
| Mw[a] | 2,900 | 2,670 | 2,870 | 15,200 |
| PDI = Mw/Mn | 2.07 | 1.92 | 1.94 | 3.80 |
| Tg[b] | 56 | 47 | 54 | -35 |
| RED #[c] | 0.91 | 0.86 | 0.88 | 0.79 |
| Refractive Index[d] | 1.592 | 1.571 | 1.588 | 1.491 |

*a) Gel permeation chromatography (GPC) on PS standards*
*b). Differential Scanning Calorimetry (DSC) @ 10°C/min (mid point)*
*c) Relative Energy Difference of FM against polycarbonate computed as reported in* Hansen Solubility Parameters - A Users Handbook, C. M. Hansen, CRC Press, 2000, pp. 1 - 13.
*d) Refractive Index (R.I.) of polycarbonate = 1.586. Note that FM A to D have different R.I.s.*

### Example 1. Enhanced Flow Formulations for Transparent Polycarbonate Injection Molding Applications

To obtain enhanced flow formulations 97 parts of polycarbonate (Lexan 141 G.E. Plastics (GEP)) were formulated, dry-blended and compounded using a temperature profile from 260°C to 290°C with 3 parts of flow modifiers A, B and C of this invention. Said formulations were injection molded into ASTM test specimens maintaining the barrel and nozzle temperature of the injection molder extruder between 275°C and 280°C, an injection pressure of 9.31 MPa, and the mold temperature was controlled at 88°C. Resulting products showed outstanding balance of moldability, impact strength, HDT, mechanical properties and transparency in comparison to the unmodified plastic. The fact that high transparency is achieved in the final molded products in spite of the refractive index (R.I.) mismatch between the polycarbonate and the FMs of this invention demonstrates the high miscibility of these FMs, given by the low RED number, in polycarbonate. These compounds are useful in injection molding applications involving high shear (thin wall or large pieces) where transparency is a requirement, such as mobile phone housings and housings for other electronic devices. Comparative results are shown below in Table 2.

**Table 2. Evaluation of Flow Modifiers in Transparent Polycarbonate Formulations**

| | Method | Units | Lexan -141 Control | +FM A | +FM B | +FM C |
|---|---|---|---|---|---|---|
| **Modifier Level (wt. % in compound)** | | | 0 | 3 | 3 | 3 |
| **MFI (@ 300°C/1.2 kg)** | ASTM D1238 | (g/10 | 11.6 min) | 15.5 | 14.3 | 15.0 |
| **MFI Increase (% vs. control)** | ASTM D1238 | % | ---- | 33.6 | 23.3 | 29.3 |
| **HDT (@ 1.8 MPa)** | ASTM °C D648 | % | 130.5 | 126.2 | 126.0 | 124.5 |
| **Notched Izod Impact (3.2 mm)** | ASTM D256 | J/m | 934 | 763 | 779 | 801 |
| **Tensile Strength (@ yield)** | ASTM D638 | MPa | 62.1 | 64.5 | 65.4 | 65.7 |
| **Elongation @ Yield** | ASTM D638 | % | 7.0 | 6.9 | 7.2 | 6.6 |
| **Elongation @ Break** | ASTM D638 | % | 195 | 161 | 194 | 181 |
| **Flexural Strength** | ASTM D790 | MPa | 91.0 | 87.6 | 88.3 | 90.3 |
| **Flexural Modulus** | ASTM D790 | MPa | 2,200 | 2,130 | 2,110 | 2,130 |
| **Young's Modulus** | ASTM D638 | MPa | 1,485 | 1,565 | 1,430 | 1,660 |
| **Haze (unpolished samples) (unaged)** | ASTM D1003 | % | 7.4 | 7.3 | 6.9 | 7.3 |
| **Haze (unpolished samples) (aged 500 hours @ 120°C)** | ASTM D1003 | % | 8.8 | 8.8 | 5.2 | 6.6 |

### Example 2. Enhanced Flow and Impact Formulations for Opaque Polycarbonate Injection Molding Applications of Thin Wall Pieces.

In order to produce enhanced flow polycarbonate formulations showing outstanding flow and impact resistance in thin wall moldings, 100 parts of polycarbonate (Lexan EXL 1414 from GEP) were dry-blended with 3 parts of flow modifier D of this invention, 5 parts of methyl methacrylate-butadiene-styrene (MBS) acrylic impact modifier (Rohm & Haas Company, Philadelphia, PA), and 4 parts of $TiO_2$. Said formulation was compounded using a temperature profile from 250°C to 270°C. The compound and the unmodified control were then injection molded into a 5x5x1 mm radial flow mold at the abusively high shear rates provided by a 90% injection speed, 8.2 MPa injection pressure and a temperature profile from 280°C to 305°C. The moldings showed outstanding moldability and impact resistance without signs of delamination or additive juicing. These compounds are useful in injection molding applications involving high shear (thin wall or large pieces) where high impact and high crack resistance are needed, such as housings for electronic devices. Comparative results are shown below in Table 3.

**Table 3. Evaluation of Flow Modifiers in Thin Wall Polycarbonate Formulations**

| | Method | Units | Control | Formula Example 2 |
|---|---|---|---|---|
| **Modifier Level (% in compound)** | | | 0 | 3 |
| **Drop-Weight Impact Strength (on 5 samples at given weight)** | ASTM D302 | @ 8 lbf | All failed[a] | All passed[b] |
| **Drop-Weight Impact Strength (on 5 samples at given weight)** | ASTM D302 | @ 25 lbf | All failed[a] | All passed[b] |
| a) fail = thin walled test specimen cracks<br>b) pass = thin wall test specimen dents without cracking | | | | |

## II. High Flow PC/ABS Blend Compositions Preparation of Flow Modifiers II:

In order to provide high flow PC/ABS formulations for injection molding applications, four different styrene-acrylic flow modifiers, labeled FM E to H below, were designed and prepared in a 2 gallon free radical continuous polymerization reactor system according to the teachings of US patent 6,605,681. The specific synthesis conditions and characterization parameters are given in Table 4 below. The abbreviations used below are defined as follows, STY = styrene, BMA = butyl methacrylate, BA = butyl acrylate, AMS = alpha-methyl styrene, AA = acrylic acid, MAH = maleic anhydride, DTBP = di-tertiary butyl peroxide, A-100 = Aromatic 100 solvent (Exxon), MAK = methyl amyl ketone.

**Table 4. Flow Modifier Preparation II.**

| | Flow Modifier E | Flow Modifier F | Flow Modifier G | Flow Modifier H |
|---|---|---|---|---|
| **Monomer Feed Composition (% of monomer feed)** | | | | |
| STY | 71.3 | 79.3 | 79.6 | 80.0 |
| BMA | --- | 10.6 | 15.9 | -- |
| BA | 9.3 | --- | 4.5 | -- |
| AMS | 18.4 | --- | --- | 14.0 |
| AA | 1.0 | 10.1 | --- | -- |
| MAH | -- | -- | -- | 6.0 |
| **Other Ingredients (% of total mix)** | | | | |
| Aromatic 100 | --- | 1.00 | 10.0 | -- |
| MAK | -- | -- | -- | 6.0 |
| Acetone | -- | -- | -- | 4.0 |
| DTBP | 2.35 | 2.15 | 1.0 | 2.3 |
| **Reaction Conditions** | | | | |
| Reaction Temp (°C) | 226 | 246 | 208 | 257 |
| Residence Time (min) | 12 | 12 | 12 | 12 |
| **Flow Modifier Characteristics** | | | | |
| Mn[a] | 1,860 | 1,200 | 3,800 | 1,200 |
| Mw[a] | 3,900 | 2,200 | 11,100 | 2,200 |
| PDI = Mw/Mn | 2.10 | 1.83 | 2.92 | 1.83 |

(continued)

|  | Flow Modifier E | Flow Modifier F | Flow Modifier G | Flow Modifier H |
|---|---|---|---|---|
| Tg[b] | 54 | 50 | 59 | 57 |
| RED #[c] | 0.86 | 0.76 | 0.85 | 0.81 |

a) GPC on PS standards
b) DSC @ 10°C/min (mid point)
c) Relative Energy Difference of FM against PC/ABS computed as reported in Hansen Solubility Parameters - A Users Handbook, C. M. Hansen, CRC Press, 2000, pp. 1 - 13.

**Example 3. Enhanced Flow Formulations for PC/ABS (low ABS) Injection Molding Applications with Outstanding Balance of Flow, Vicat Softening Temperature (VST) and Impact Resistance**

To obtain enhanced flow formulations 95 to 97 parts of a low ABS content PC/ABS blend (Cycoloy 1200 from GEP) were dry-blended and compounded using a temperature profile from 260°C to 275°C with 3 to 5 parts of flow modifiers E, F and G of this invention. Said formulations were injection molded into ASTM test specimens using a temperature profile from zone 1 to nozzle between 275°C and 280°C at an injection pressure of 5.17 MPa. Mold temperature was controlled at 88°C. The melt viscosity of said formulations were determined by capillary rheometry, using the method described in ASTM D3835-96. A Goettfert Rheolgraph 2003 Capillary Rheometer was used, having a 12mm barrel diameter, a 0.5mm inner diameter, a die length of 20mm, and a 180° die entry angle. The measurements were performed at 300°C, using a six minute preheating time. The resulting products showed outstanding balance of moldability, impact strength, and VST, in comparison to the unmodified plastic. These compounds are useful in injection molding applications involving high shear (thin wall or large pieces) where outstanding impact resistance and VST are requirements. Such applications include housings for mobile phones and other electronic devices. Comparative results are shown below in Table 5.

**Table 5. Evaluation of Flow Modifiers in PC/ABS (low ABS) Formulations**

| | Method | Units | C-1200 Control Injected | C-1200 Control Extruded | C-1200+FM E | C-1200+FM E | C-1200+FM F | C-1200+FM F | C-1200 +FM G | C-1200 +FM G |
|---|---|---|---|---|---|---|---|---|---|---|
| **Modifier Level (% in compound)** | | | 0 | 0 | 3 | 5 | 3 | 5 | 3 | 5 |
| **MFI (230°C/3.8 kg)** | ASTM D1238 | (g/10 min) | 2.1 | 2.3 | 2.7 | 3.3 | 3.4 | 4.7 | 2.7 | 3.4 |
| **MFI Increase (% vs. control)** | ASTM D1238 | % | -- | 9.5 | 28.6 | 57.1 | 61.9 | 123.8 | 28.6 | 61.9 |
| **VST (@ 50 N)** | ASTM D648 | °C | 134.0 | 133.8 | 131.7 | 128.4 | 128.7 | 126.1 | 131.4 | 129.1 |
| **Notched Izod Impact (3.2 mm)** | ASTM D256 | J/m | 737 | 731 | 785 | 849 | 694 | 774 | 758 | 667 |
| **Capillary Rheometry Viscosity** | ASTM D3835 | cps | | | | | | | | |
| **1,000s-1** | | | -- | 102,000 | -- | 64,100 | -- | 40,500 | -- | 49,500 |
| **10,000s-1** | | | -- | 30,200 | -- | 23,300 | -- | 21,800 | -- | 28,500 |

**Example 4. Enhanced Flow Formulations for PC/ABS (high ABS) Injection Molding Applications with Outstanding Balance of Flow, VST and Impact Resistance**

To obtain enhanced flow formulations 95 to 97 parts of a high ABS content PC/ABS blend (Cycoloy 1000HF from GEP) were dry-blended with 3 to 5 parts of flow modifiers E, F and G of this invention and compounded and injection molded at conditions given in Example 3. Resulting products showed an outstanding balance of moldability, impact strength, and VST, in comparison to the unmodified plastic. These compounds are useful in injection molding applications involving high shear (thin wall or large pieces) where outstanding impact resistance and VST are requirements, such as housings for mobile phones and other electronic devices. Comparative results are shown below in Table 6.

**Table 6 Evaluation of Flow Modifiers in PC/ABS (high ABS) Formulations**

| | Method | Units | C-1000 Control Injected | C-1000 Control Extruded | C-1000 +FM E | C-1000 +FM E | C-1000 +FM F | C-1000 +FM F | C-1000 +FM G | C-1000 +FM G |
|---|---|---|---|---|---|---|---|---|---|---|
| **Modifier Level (% in compound)** | | | 0 | 0 | 3 | 5 | 3 | 5 | 3 | 5 |
| **MFI (230°C/3.8 kg)** | ASTM D1238 | (g/10 min) | 6.0 | 6.0 | 7.1 | 8.0 | 8.0 | 10.3 | 7.5 | 8.3 |
| **MFI Increase (% vs. control)** | ASTM D1238 | % | ---- | 0.0 | 18.3 | 33.3 | 33.3 | 71.7 | 25.0 | 38.3 |
| **VST (@ 50 N)** | ASTM D648 | °C | 113.0 | 114.8 | 112.7 | 111.3 | 112.4 | 110.5 | 112.3 | 111.2 |
| **Notched Izod Impact (3.2 mm)** | ASTM D256 | J/m | 571 | 518 | 480 | 518 | 443 | 363 | 1,078 | 491 |

**Example 5. Enhanced Flow Formulations for PC/ABS (low ABS) Fire Retardant Injection Molding Applications.**

In order to produce a fire retardant (FR) PC/ABS formulation showing outstanding flow, impact resistance and fire retardancy 97.1 and 95.2 parts of FR PC/ABS (Bayblend FR 2010; Bayer Polymers) were formulated, dry-blended and compounded in a Brabender 15mm Conical Twin Screw Co-Rotating Extruder, using a temperature profile between 230°C and 250°C with 2.9 and 4.8 parts of flow modifiers E and F of this invention. Said formulations were injection molded using a Battenfeld 29M ton injection Molding Machine into ASTM test specimens maintaining the barrel and nozzle temperature of the injection molder extruder between 240°C and 265°C, an injection pressure of 14.0 MPa, and the mold temperature was controlled at 54°C.

The molded parts showed an outstanding balance of moldability, impact strength, VST, and mechanical properties in comparison to the unmodified plastic without signs of delamination or juicing. These compounds are useful in injection molding applications requiring high shear (thin wall or large pieces) and fire retardancy, such as housings for electronic devices, personal care items, and household appliances. Comparative results are shown below in Table 7.

**Table 7. Evaluation of Flow Modifiers in FR PC/ABS (low ABS) Formulations**

| | Modifier Level (% in compound) | Melt Index (MFI) | Notched Izod Impact | Vicat Softening Point (VST) | Tensile Stress @ Yield |
|---|---|---|---|---|---|
| **Test Method** | | ASTM D1238 (260°C/5kg) | ASTM D256 (3.2 mm) | ASTM D1525 (Rate B: 5kg; 120°C/h) | ASTM D639 |

(continued)

| | Modifier Level (% in compound) | Melt Index (MFI) | Notched Izod Impact | Vicat Softening Point (VST) | Tensile Stress @ Yield |
|---|---|---|---|---|---|
| Units | | (g/10min) | (J/m) | (°C) | (MPa) |
| FR-2010 Control Injected | 0 | 32.0 | 528 | 107.8 | 55.9 |
| FR-2010+E | 2.9 | 34.0 | 467 | 105.0 | 55.0 |
| FR-2010+E | 4.8 | 40.0 | 431 | 104.4 | 54.9 |
| FR-2010+F | 2.9 | 36.0 | 447 | 105.6 | 55.5 |
| FR-2010+F | 4.8 | 36.0 | 411 | 104.4 | 55.4 |

**Example 6. Enhanced Flow Formulations for PC/ABS (high ABS) Fire Retardant Injection Molding Applications.**

In order to produce a FR PC/ABS formulation showing outstanding flow, impact resistance and fire retardancy between 97.1 and 95.2 parts of FR PC/ABS (Bayblend FR 2000; Bayer Polymers) were formulated, dry blended, and compounded using the conditions stated in Example 5 with between 2.9 and 4.8 parts of flow modifiers F and H of this invention. Said formulations were injection molded using the conditions stated in Example 5.

The molded parts showed an outstanding balance of moldability, impact strength, VST, and mechanical properties in comparison to the unmodified plastic without signs of delamination or juicing. These compounds are useful in injection molding applications requiring high shear (thin wall or large pieces) and fire retardancy, such as housings for electronic devices, personal care items, and household appliances. Comparative results are shown below in Table 8.

**Table 8. Evaluation of Flow Modifiers in FR PC/ABS (high ABS) Formulations**

| | Modifier Level (% in compound) | Melt Index (MFI) | Notched Izod Impact | Vicat Softening Point (VST) | Tensile Stress @ Yield |
|---|---|---|---|---|---|
| Test Method | | ASTM D1238 (260°C/5kg) | ASTM D256 (3.2 mm) 120°C/h | ASTM D1525 (Rate B: 5kg; | ASTM D639 |
| Units | | (g/10min) | (J/m) | (°C) | (MPa) |
| FR-2000 Control Injected | 0 | 26.0 | 499 | 91.7 | 54.3 |
| FR-2000+H | 2.9 | 32.0 | 472 | 90.6 | 54.7 |
| FR-2000+H | 4.8 | 34.0 | 352 | 90.0 | 53.1 |
| FR-2000+F | 2.9 | 32.0 | 472 | 90.0 | 54.7 |
| FR-2000+F | 4.8 | 37.0 | 382 | 88.9 | 54.3 |

**III. High Flow Polyesters and Polyester/Thermoplastics Blend Compositions Preparation of Flow Modifiers III:**

In order to provide high flow polyester formulations for injection molding applications, flow modifiers C and F of this invention were evaluated along with two different styrene-acrylic flow modifiers, labeled FM J and K below, which were designed, and then prepared in a 2 gallon free radical continuous polymerization reactor system according to the teachings of US patent 6,605,681. The specific synthesis conditions and characterization parameters are given in Table 9 below. The abbreviations used below are defined as follows, STY = styrene, MMA = methyl methacrylate, BA = butyl acrylate, IPA = iso-propyl alcohol, DTAP = di-tertiary amyl peroxide, DTBP = di-tertiary butyl peroxide, A-100 = Aromatic 100 solvent (Exxon).

**Table 9. Flow Modifier Preparation III**

|  | Flow Modifie J | Flow Modifier K |
|---|---|---|
| **Monomer Feed Composition (% of monomer feed)** |  |  |
| STY | --- | 50.7 |
| MMA | --- | 49.3 |
| BA | 100 | --- |
| **Other Ingredients (% of total mix)** |  |  |
| IPA | 4.2 | --- |
| A-100 | --- | 0.9 |
| DTAP | 1.5 | --- |
| DTBP | --- | 2.2 |
| **Reaction Conditions** |  |  |
| Reaction Temp (°C) | 243 | 206 |
| Residence Time (min) | 12 | 12 |
| **Flow Modifier Characteristics** |  |  |
| Mn[a] | 1,100 | 1,700 |
| Mw[a] | 1,700 | 4,000 |
| PDI = Mw/Mn | 1.54 | 2.35 |
| Tg[b] | -66 | 52 |
| RED #[c] | 1.22 | 1.35 |
| a) GPC on PS standards<br>b) DSC @ 10°C/min (mid point)<br>c) Relative Energy Difference of FM against PBT computed as reported in Hansen Solubility Parameters - A Users Handbook, C. M. Hansen, CRC Press, 2000, pp. 1 - 13. | | |

**Example 7. Enhanced Flow Formulations for Polyester Injection Molding Applications**

To obtain enhanced flow formulations 95 to 97 parts of poly(butylene terephthalate) (PBT) (Valox 325 from GEP) were dry-blended with 3 to 5 parts of flow modifiers C, F, J and K of this invention and compounded using a temperature profile from 230°C to 250°C. Said formulations were injection molded into ASTM test specimens using a temperature profile from zone 1 to nozzle between 270°C and 280°C at an injection pressure of 4.14 MPa, mold temperature was controlled at 65°C. The resulting products show outstanding balance of moldability, impact strength, VST, and mechanical properties in comparison to the unmodified plastic. These compounds are useful in injection molding applications involving high shear (thin wall or large pieces) where an excellent balance of moldability, impact resistance, VST and mechanical properties is a requirement, such as in automobile parts, including indicator panels and mirror housings and housings for appliances and some electronic devices. Comparative results are shown below in Table 10.

**Table 10. Evaluation of Flow Modifiers in PBT Formulations**

|  | Method | Units | V-325 Control Extruded | +FM J | +FM K | +FM C | +FM F | +FM F |
|---|---|---|---|---|---|---|---|---|
| **Modifier Level (% in compound)** |  |  | 0 | 5 | 5 | 5 | 3 | 5 |

(continued)

| | Method | Units | V-325 Control Extruded | +FM J | +FM K | +FM C | +FM F | +FM F |
|---|---|---|---|---|---|---|---|---|
| MFI (230°C/2.16 kg) | ASTM D1238 | (g/10 min) | 6.5 | 7.5 | 12.9 | 7.5 | 10.8 | 11.6 |
| MFI Increase (% vs. control) | ASTM D1238 | % | --- | 15.4 | 98.5 | 15.4 | 66.2 | 78.5 |
| VST (@ 50 N) | ASTM D648 | °C | 170.3 | 167.8 | 162.7 | 172.1 | 174.2 | 170.6 |
| Notched Izod Impact (3.2 mm) | ASTM D256 | J/m | 32 | 43 | 27 | 27 | 32 | 27 |
| Tensile Strength (@ yield) | ASTM D638 | MPa | 6.8 | 52.0 | 53.5 | 57.5 | 57.9 | 57.9 |
| Elongation@ Yield | ASTM D638 | % | 3.4 | 4.3 | 3.7 | 3.8 | 3.9 | 3.7 |
| Elongation@ Break | ASTM D638 | % | 10.7 | 19.5 | 9.1 | 8.4 | 11.1 | 10.6 |
| Young's Modulus | ASTM D638 | MPa | 2,524 | 2,441 | 2,662 | 2,931 | 2,745 | 2,786 |

**Example 8. Enhanced Flow Formulations for Glass Fiber Reinforced Polyester Injection Molding Applications**

To obtain enhanced flow formulations 95 to 97 parts of glass fiber reinforced poly(butylene terephthalate) (Valox 420 from GEP) were dry-blended with 3 to 5 parts of flow modifiers C, F, J and K of this invention and compounded and molded under the same conditions as Example 7. Resulting products showed outstanding balance of moldability, impact strength, VST, and mechanical properties in comparison to the unmodified plastic. These compounds are useful in injection molding applications involving high shear and complicated molds (large pieces) where an extremely high VST and an excellent balance of moldability, impact resistance, and mechanical properties are requirements, such as automobile parts, including indicator panels, mirror, and headlamps housings. Comparative results are shown below in Table 11.

**Table 11. Evaluation of Flow Modifiers in Glass Fiber Reinforced PBT Formulations**

| | Method | Units | V-420 Control Extruded | +FM J K | +FM | +FM C | +FM F | +FM F |
|---|---|---|---|---|---|---|---|---|
| Modifier Level (% in compound) | | | 0 | 5 | 5 | 5 | 3 | 5 |
| MFI (230°C/2.16 kg) | ASTM D1238 | (g/10 min) | 7.2 | 10.2 | 12.8 | 9.3 | 12.9 | 17.5 |
| MFI Increase (% vs. control) | ASTM D1238 | % | --- | 41.7 | 77.8 | 29.2 | 79.2 | 143.1 |
| VST (@ 50 N) | ASTM D648 | °C | 207.3 | 202.7 | 203.9 | 203.9 | 205.7 | 200.3 |

(continued)

| | Method | Units | V-420 Control Extruded | +FM J K | +FM | +FM C | +FM F | +FM F |
|---|---|---|---|---|---|---|---|---|
| Notched Izod Impact (3.2 mm) | ASTM D256 | J/m | 43 | 112 | 43 | 53 | 43 | 37 |
| Tensile Strength (@ yield) | ASTM D638 | MPa | 99.3 | 82.8 | 93.1 | 95.9 | 95.9 | 89.7 |
| Elongation@ Yield | ASTM D638 | % | 3.0 | 3.3 | 2.8 | 2.9 | 2.9 | 2.4 |
| Elongation@ Break | ASTM D638 | % | 3.1 | 3.6 | 3.0 | 3.2 | 2.9 | 2.4 |
| Young's Modulus | ASTM D638 | MPa | 8,069 | 6,966 | 7,034 | 7,586 | 7,724 | 7,586 |

## IV. High Flow Polyamide Compositions Preparation of Flow Modifiers IV:

In order to provide high flow polyamide and polyamide-based blend formulations for injection molding applications, flow modifier K of this invention was evaluated along with three other styrene-acrylic flow modifiers, labeled FM L, M, and N below, which were designed, and then prepared in a 2 gallon free radical continuous polymerization reactor system according to the teachings of U.S. Patent Application 09/354,350. The specific synthesis conditions and characterization parameters are given in Table 12 below. The abbreviations used below are defined as follows, STY = styrene, AA = acrylic acid, BA = butyl acrylate, 2-EHA = 2-ethylhexyl acrylate, EA = ethyl acrylate, IPA = iso-propyl alcohol, DTBP = di-tertiary butyl peroxide, A-100 = Aromatic 100 solvent (Exxon).

**Table 12. Flow Modifier Preparation IV.**

| | Flow Modifier L | Flow Modifier M | Flow Modifier N |
|---|---|---|---|
| **Monomer Feed Composition (% of monomer feed)** | | | |
| STY | 91.47 | -- | -- |
| AA | 5.43 | -- | -- |
| BA | -- | 25 | 10 |
| 2-EHA | -- | 75 | -- |
| EA | -- | -- | 90 |
| **Other Ingredients (% of total mix)** | | | |
| IPA | -- | 5 | 5 |
| Xyene | -- | 4 | 4 |
| A-100 | 0.9 | -- | -- |
| DTBP | 2.2 | 1 | 1 |
| **Reaction Conditions** | | | |
| Reaction Temp (°C) | 243 | 230 | 225 |
| Residence Time (min) | 12 | 12 | 12 |
| **Flow Modifier Characteristics** | | | |
| Mn[a] | 1,500 | 1,400 | 1,400 |
| Mw[a] | 2,900 | 2,600 | 3,000 |
| PDI = Mw/Mn | 1.93 | 1.91 | 2.11 |

(continued)

|  | Flow Modifier L | Flow Modifier M | Flow Modifier N |
|---|---|---|---|
| Tg[b] | 66 | -69 | -34 |
| RED #[c] | 2.16 | 1.86 | 1.64 |
| a) GPC on PS standards | | | |
| b) DSC @ 10°C/min (mid point) | | | |
| c) Relative Energy Difference of FM against PA 6 computed as reported in Hansen Solubility Parameters - A Users Handbook, C. M. Hansen, CRC Press, 2000, pp. 1 - 13. | | | |

### Example 9. Enhanced Flow Formulations for Polyamide Injection Molding Applications.

To obtain enhanced flow formulations 95 and 97 parts of polyamide 6 (Ultramide B3, Bayer Polymers) were melt blended with 3 and 5 parts flow modifier N of this invention using a Brabender Plasticorder Mixing Bowl. The melt was blended for 2 to 5 minutes, maintaining the temperature profile between 250°C and 280°C. The resulting compounds demonstrate outstanding flow properties when compared to the unmodified polyamide 6. Comparative results are shown below in Table 13.

**Table 13. Evaluation of Flow Modifiers in Polyamide 6,6.**

|  | Units | PA 6 Control | +FM N | +FMN |
|---|---|---|---|---|
| Modifier Level (% in compound) |  | 0 | 3 | 5 |
| MFI (270°C/1.2 kg) | (g/10 min) | 42.8 | 47.6 | 50.3 |
| MFI Increase (% vs. control) | % | --- | 11 | 17 |

### Example 10. Enhanced Flow Formulations for Polyamide Injection Molding Applications.

To obtain enhanced flow formulations 95 and 97 parts of polyamide 6,6 (Zytel L101, DuPont) were melt blended with 3 and 5 parts flow modifiers M and N of this invention using a Brabender Plasticorder Mixing Bowl. The melt was blended for 2 to 5 minutes, maintaining the temperature profile between 250°C and 280°C. The resulting compounds demonstrate outstanding flow properties when compared to the unmodified polyamide 6,6. Comparative results are shown below in Table 14.

**Table 14. Evaluation of Flow Modifiers in Polyamide 6.**

|  | Units | PA 6,6 Control | +FM M | +FM N | + FM N |
|---|---|---|---|---|---|
| Modifier Level (% in compound) |  | 0 | 5 | 3 | 5 |
| MFI (270°C/1.2kg) | (g/10 min) | 34.0 | 41.8 | 38.4 | 38.1 |
| MFI Increase (% vs. control) | % | --- | 23 | 13 | 12 |

### Example 11. Enhanced Flow Formulations for Reinforced Polyamide Injection Molding Applications

To obtain enhanced flow formulations 82 parts of polyamide 6,6 (PA 6,6) (Rhodia) were dry-blended with 3 parts of flow modifiers K and L of this invention and compounded using a temperature profile from 270°C to 290°C with lateral feed of 15 parts of glass fiber (GF). Said formulations were injection molded into ASTM test specimens using a temperature profile from zone 1 to nozzle between 280°C and 300°C. Resulting products show outstanding balance of moldability, impact strength, and mechanical properties in comparison to the unmodified plastic. These compounds are useful in injection molding applications involving complicated molds and high shear (large pieces) where an excellent balance of moldability, impact resistance, and mechanical properties is a requirement, such as under-the-hood automobile parts, including engine covers and other parts. Comparative results are shown below in Table 15.

**Table 15. Evaluation of Flow Modifiers in Polyamide Formulations**

| | Method | Units | PA 6,6 + 15% GF Control | +FM K | +FM L |
|---|---|---|---|---|---|
| Modifier Level (% in compound) | | | 0 | 3 | 3 |
| MFI (300°C/1.2 kg) | ASTM D1238 | (g/10 min) | 25.8 | 34.5 | 29.3 |
| MFI Increase (% vs. control) | ASTM D1238 | % | --- | 33.7 | 13.6 |
| Notched Izod Impact (3.2 mm) | ASTM D256 | J/m | 336 | 315 | 315 |
| Flexural Modulus (@ yield) | ASTM D790 | MPa | 3,920 | 3,770 | 3,920 |
| Elongation @ Break | ASTM D638 | % | 2.2 | 2.4 | 2.5 |

**V. High Flow Poly(Phenylene Ether) Blend Compositions**

In order to provide increased flow poly(phenylene Ether) based blend formulations for injection molding applications, flow modifiers A and H of this invention was evaluated along with another styrene-acrylic flow modifier, labeled FM O below, which was designed, and then prepared in a 2 gallon free radical continuous polymerization reactor system according to the teachings of U.S. Patent 6,605,681. The specific synthesis conditions and characterization parameters are given in Table 16 below. The abbreviations used below are defined as follows, STY = styrene, AMS = alpha methyl styrene, MAH = maleic anhydride, DTBP = di-tertiary butyl peroxide.

**Table 16. Flow Modifier Preparation V.**

| | Flow Modifier O |
|---|---|
| Monomer Feed Composition (% of monomer feed) | |
| STY | 80 |
| AMS | 5 |
| MAH | 15 |
| Other Ingredients (% of total mix) | |
| Acetone | 10 |
| DTBP | 1.9 |
| Reaction Conditions | |
| Reaction Temp (°C) | 240 |
| Residence Time (min) | 15 |
| Flow Modifier Characteristics | |
| Mn[a] | 1,600 |
| Mw[a] | 3,400 |
| PDI = Mw/Mn | 2.15 |
| Tg[b] | 87 |

(continued)

|  | Flow Modifier O |
|---|---|
| RED #[c] | 0.57 |

| a) GPC on PS standards |
| b) DSC @ 10°C/min (mid point) |
| c) Relative Energy Difference of FM against PPO computed as reported in Hansen Solubility Parameters - A Users Handbook, C. M. Hansen, CRC Press, 2000, pp. 1 - 13. |

**Example 12** Enhanced Flow Formulations for Poly(phenylene ether) Based Blends for Injection Molding Applications

To obtain enhanced flow formulations 98 and 96 parts of a PPE, styrenic blend (Noryl N190, GEP) were formulated, dry-blended and compounded in a Brabender 15mm Conical Twin Screw Co-Rotating Extruder using a temperature profile between 240°C and 280°C with 2 and 4 parts flow modifiers A, H and O of this invention. Said compositions were injection molded using a Meiki 50 ton injection molding machine into ASTM test specimens maintaining the barrel and nozzle temperature of the injection molder between 230°C and 250°C, an injection pressure of 0.82 MPa, and the mold temperature was controlled at 40°C. The resultant compounds demonstrated an outstanding balance of MFI, moldability, impact strength, VST, and mechanical properties in comparison to the unmodified PPE blends with out the occurrence of juicing or delamination. These compounds are useful in injection molding applications were increased flow is required such as computer equipment and other electronic devices. Comparative results are shown below in Table 17.

### Table 17. Evaluation of Flow Modifiers in Poly(Phenylene Ether) Blend Formulations.

| Modifier | Level (% in compound) | MFI | Tensile Stress Break | Flexural Stress Break | Izod Impact | Vicat Softening Point |
|---|---|---|---|---|---|---|
| Method | -- | ASTM D1238 (280°C/5kg) | ASTM D638 (50mm/min) | ASTM D790 (1.3mm/mm) | ASTM D256 | ASTM D1525 (Rate B: 5kg; 120°C/h) |
| Units | -- | (g/10min) | (MPa) | (MPa) | (J/m) | °C |
| Extruded Control | 0 | 35.1 | 48.4 | 80.5 | 208.6 | 116 |
| +FM A | 2 | 33.0 | 46.2 | 80.1 | 197.6 | 115 |
| +FM A | 4 | 39.5 | 46.4 | 78.2 | 183.8 | 124 |
| +FM H | 4 | 39.4 | 46.5 | 80.7 | 189.5 | 125 |
| +FM O | 4 | 38.6 | 46.9 | 79.7 | 188.8 | 115 |

### V. High Flow Transparent-ABS Compositions Preparation of Flow Modifiers VI:

In order to provide high flow in transparent-ABS formulations for injection molding applications, four different styrene-acrylic flow modifiers, labeled FM J, P, Q, and R below, were designed and prepared in a 2 gallon free radical continuous polymerization reactor system according to the teachings of US patent 6,605,681. The specific synthesis conditions and characterization parameters are given in table 15 below. The abbreviations used below are defined as follows, STY = styrene, MMA = methyl methacrylate, 2-EHA = 2-ethylhexyl acrylate, BA = butyl acrylate, DTAP = di-tertiary amyl peroxide, DTBP = di-tertiary butyl peroxide, IPA = iso-propyl alcohol, A-100 = Aromatic 100 solvent (Exxon).

### Table 18. Flow Modifier Preparation VI

|  | Flow Modifier J | Flow Modifier P | Flow Modifier Q | Flow Modifier R |
|---|---|---|---|---|
| Monomer Feed Composition (% of monomer feed) |  |  |  |  |

(continued)

| | Flow Modifier J | Flow Modifier P | Flow Modifier Q | Flow Modifier R |
|---|---|---|---|---|
| STY | --- | 20 | --- | 30 |
| 2-EHA | --- | --- | 100 | --- |
| MMA | --- | --- | --- | 70 |
| BA | 100 | 80 | --- | --- |
| **Other Ingredients (% of total mix)** | | | | |
| IPA | 4.2 | 20 | 20 | --- |
| Aromatic 100 | --- | --- | --- | 8 |
| DTAP | 1.5 | --- | --- | --- |
| DTBP | --- | 1 | 1 | 2 |
| **Reaction Conditions** | | | | |
| Reaction Temp (°C) | 243 | 275 | 275 | 196 |
| Residence Time (min) | 12 | 12 | 12 | 12 |
| **Flow Modifier Characteristics** | | | | |
| Mn[a] | 1,100 | 1,200 | 1,190 | 1,700 |
| Mw[a] | 1,700 | 2,050 | 2,020 | 3,800 |
| PDI=Mw/Mn | 1.55 | 1.71 | 1.70 | 2.24 |
| Tg[b] | -66 | -45 | -65 | 51 |
| RED #[c] | 0.55 | 0.58 | 0.65 | 0.60 |
| Refractive Index[d] | 1.4650 | 1.4899 | 1.4650 | 1.5201 |
| a) GPC on PS standards<br>b) DSC @ 10°C/min (mid point)<br>c) Relative Energy Difference of FM against ABS computed as reported in Hansen Solubility Parameters - A Users Handbook, C. M. Hansen, CRC Press, 2000, pp. 1-13.<br>d) R.I. of Transparent ABS = 1.515 - 1.520. Note that FMs above have different R.I.s. | | | | |

### Example 13. Enhanced Flow Formulations for Transparent-ABS Injection Molding Applications

To obtain enhanced flow formulations 100 parts of transparent-ABS (Starex CT- 0520 from Cheil Chemicals) were formulated, dry-blended with 3 to 9 parts of flow modifiers J, P, Q, and R of this invention and then compounded in a 30 mm twin screw extruder using a temperature profile from 180°C to 200°C. Said formulations were injection molded into ASTM test specimens using a DM Mekei Co, M-50A injection molding machine (50 metric tons of clamping force) fitted with a 28 mm screw. The temperature profile used from zone 1 to nozzle was controlled between 200°C and 190°C. The resulting compounds showed outstanding MFI increases. The resulting molding products showed outstanding balance ofmoldability, impact strength, HDT, mechanical properties and transparency in comparison to the unmodified plastic. The fact that high transparency is achieved in the final molded products in spite of the R.I. mismatch between transparent-ABS and the FMs of this invention demonstrates the high miscibility of these FMs, given by the low RED number, in this plastic. These compounds are useful in injection molding applications involving high shear (thin wall or large pieces) where transparency is a requirement, such as housings for electronic devices. Comparative results are shown below in Tables 19 and 20.

**Table 19. Evaluation of Flow Modifiers in Transparent ABS Formulations***

| Formula 100 parts of Transparent BS (Starex CT-0520) + | MFI (220°C/10 kg (g/10") | HAZE (%) | HAZE Increase (% vs. injected control) | Color (ΔE) | Notched Charpy Impact (Kgf-cm/cm) |
|---|---|---|---|---|---|
| Injection Molded Control | 15.9 | 3.0 | 0.0 | 0.0 | 17.2 |
| Extruded/Injected Control | 18.6 | 3.6 | 0.6 | 1.5 | 16.9 |
| FM-J @ 3 phr | 28.6 | 3.3 | 0.3 | 0.9 | 14.6 |
| FM-J @ 5 phr | 37.3 | 4.0 | 1.0 | 0.8 | 13.6 |
| FM-J @ 7 phr | 46.1 | 3.5 | 0.5 | 1.8 | 12.0 |
| FM-P @ 3 phr | 29.3 | 2.4 | -0.6 | 1.2 | 15.5 |
| FM-P @ 5 phr | 34.6 | 3.3 | 0.3 | 3.7 | 13.2 |
| FM-P @ 7 phr | 41.7 | 4.0 | 1.0 | 5.6 | 14.0 |
| FM-Q @ 3 phr | 30.2 | 3.0 | 0.0 | 2.3 | 15.6 |
| FM-Q @ 5 phr | 38.5 | 2.9 | -0.1 | 4.1 | 14.5 |
| FM-Q @ 7 phr | 47.5 | 3.6 | 0.6 | 2.0 | 13.6 |
| FM-R @ 5 phr | 29.6 | 3.8 | 0.8 | 1.0 | 13.7 |
| FM-R @ 7 phr | 36.8 | 2.5 | -0.5 | 1.9 | 10.8 |
| FM-R @ 9 phr | 43.1 | 3.6 | 0.6 | 1.4 | 7.6 |
| * same ASTM methods used in these evaluations as in previous examples. | | | | | |

**Table 20. Evaluation of Flow Modifiers in Transparent ABS Formulations***

| Formula 100 parts of Transparent ABS (Starex CT-0520) + | TENSILE STRENGTH (Kgf/cm$^2$) | Elongation @ BREAK (5 mm/min) (%) | FLEXURAL STRENGTH (Kgf/cm$^2$) | FLEXURAL MODULUS (Kgf/cm$^2$) | VST (°C) | HDT (°C) |
|---|---|---|---|---|---|---|
| Injection molded Control | 380 | 15.2 | 564 | 17,624 | 96.4 | 77.0 |
| Extruded/ injected Control | 390 | 16.4 | 586 | 18,709 | 97.5 | 77.5 |
| FM-J @ 3 phr | 370 | 17.2 | 545 | 17,442 | 91.6 | 72.2 |
| FM-J @ 5 phr | 360 | 13.9 | 535 | 17,775 | 88.7 | 66.9 |
| FM-J @ 7 phr | 340 | 18.2 | 505 | 17,185 | 84.5 | 66.0 |
| FM-P @ 3 phr | 380 | 16.9 | 553 | 17,767 | 91.9 | 71.7 |
| FM-P @ 5 phr | 370 | 14.0 | 558 | 17,958 | 89.3 | 69.9 |
| FM-P @ 7 phr | 360 | 17.5 | 532 | 17,205 | 87.5 | 67.8 |
| FM-Q @ 3 phr | 370 | 9.5 | 537 | 17,735 | 93.2 | 71.3 |
| FM-Q @ 5 phr | 350 | 13.4 | 510 | 16,845 | 88.0 | 66.9 |
| FM-Q @ 7 phr | 340 | 12.9 | 491 | 16,487 | 86.5 | 66.6 |

(continued)

| Formula 100 parts of Transparent ABS (Starex CT-0520) + | TENSILE STRENGTH (Kgf/cm$^2$) | Elongation @ BREAK (5 mm/min) (%) | FLEXURAL STRENGTH (Kgf/cm$^2$) | FLEXURAL MODULUS (Kgf/cm$^2$) | VST (°C) | HDT (°C) |
|---|---|---|---|---|---|---|
| FM-R @ 5 phr | 390 | 15.3 | 562 | 18,055 | 95.6 | 75.2 |
| FM-R @ 7 phr | 400 | 12.7 | 571 | 18,225 | 93.7 | 74.1 |
| * same ASTM methods used in these evaluations as in previous examples. | | | | | | |

**Example14. Enhanced Flow Formulations for High Temperature Polycarbonate Applications.**

In order to produce enhanced flow polycarbonate formulations showing outstanding resistance to thermal degradation in thin wall moldings, 98 parts of a polycarbonate were dry-blended with 2 parts of flow modifier F of this invention. Said formulation was compounded using procedures recommended in the literature and pelletized. The thermal stability of said compound was determined using a TA Instruments AutoTGA 2950 instrument operated isothermally at 270°C and 300°C and dynamically using a 5°C / minute heating ramp from room temperature to 500°C. The compound demonstrated outstanding thermal stability. This compound would be useful in injection molding applications involving high shear (thin wall or large pieces) where high thermal resistance is needed, such as housings for electronic devices. Comparative results are shown in Table 21.

**Table 21. Evaluation of Flow Modifier F in Polycarbonate Formulations**

| Test Methodology | | | | |
|---|---|---|---|---|
| **Isothermal** | **Units** | **10 minutes** | **20 minutes** | **30 minutes** |
| Weight Loss at 270°C | % | 0.03 | 0.07 | 0.10 |
| Weight Loss at 270°C | % | 0.30 | 0.46 | 0.57 |
| **Dynamic** | | **270°C** | **300°C** | **320°C** |
| Weight Loss | % | 0.06 | 0.16 | 0.32 |

As will be understood by one skilled in the art, for any and all purposes, particularly in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein can be readily broken down into a lower third, middle third and upper third, etc. As will also be understood by one skilled in the art all language such as "up to," "at least," "greater than," "less than," and the like include the number recited and refer to ranges which can be subsequently broken down into subranges as discussed above.

**Claims**

1.   A high flow thermoplastic composition comprising:

(a) a host polymer; and
(b) a flow modifier polymer having a weight average molecular weight of less than 15,000, the modifier polymer comprising at least one (meth)acrylate monomer and at least one vinyl aromatic monomer,

wherein the said composition is **characterized by** a relative energy difference (R.E.D.) between the flow modifier and the host polymer of less than 2.2, a melt flow index at least 5 percent higher than the host polymer, a notched Izod impact strength of no more than 40% less than the host polymer, a heat deflection temperature of no more than 10 °C less than the host polymer, and a Vicat softening temperature of no more than 10 °C less than the host polymer, and the flow modifier polymer is not a diene-based graft polymer or another rubber based polymer.

2. The high flow thermoplastic composition of claim 1, wherein the weight average molecular weight of the flow modifier polymer is less than 10.000.

3. The high flow thermoplastic composition of claim 1, wherein the weight average molecular weight of the flow modifier polymer is less than 5,000.

4. The high flow thermoplastic composition of any of claims 1 to 3, wherein the host polymer is selected from the group consisting of polycarbonates, polycarbonate/acrylonitrile-butadiene-styrene blends, polyamides, polyesters, polyphenylene ethers, transparent ABS resins, and combinations thereof.

5. The high flow thermoplastic composition of claim 4, wherein the host polymer is a polycarbonate.

6. The high flow thermoplastic composition of claim 4, wherein the host polymer is a polycarbonate/acrylonitrile-butadiene-styrene blend.

7. The high flow thermoplastic composition of any of claims 1 to 3, wherein the host polymer is selected from the group of polymers consisting of polyamide, poly(butylene terephthalate), poly(propylene terephthalate), poly(ethylene terephthalate), PETG, polyethylene naphthalate, polyphenylene oxide, and combinations thereof.

8. The high flow thermoplastic composition of any of claims 1 to 7, wherein the host polymer is present in an amount of from 50 to 99 weight percent and the flow modifier polymer is present in an amount of from 1 to 20 weight percent.

9. The high flow thermoplastic composition of any of claims 1 to 8, wherein the flow modifier polymer comprises

    (b1) 1 to 99 % of at least one (meth)acrylate monomer,
    (b2) 99 to 1 % of at least one vinyl aromatic monomer, and
    (b3) 0 to 99% of another monomer or mix of monomers able to copolymerize with (b1) and (b2).

10. The high flow thermoplastic composition of claim 9, wherein the flow modifier polymer comprises from 1 to 70 weight percent of at least one (meth)acrylate monomer and from 99 to 30 weight percent of at least one vinyl aromatic monomer.

11. The high flow thermoplastic composition of any of claims 1 to 10, wherein the composition is a transparent composition having a haze percentage that differs by less than about 1 % from the haze percentage of the host polymer.

12. The high flow thermoplastic composition of any of claims 1 to 11, further comprising at least one additive wherein the additive is an impact modifier, a mineral filler, a pigment, a dye, or a fire retardant.

13. The high flow thermoplastic composition of any of claims 1 to 12, wherein the at least one vinyl aromatic monomer is styrene or a styrene derivative, and the at least one (meth)acrylate monomer is selected from the group consisting of butyl methacrylate, methyl methacrylate, glycidyl methacrylate, butyl acrylate, 2-ethylhexyl acrylate, ethyl acrylate, acrylic acid and maleic anhydride.

14. The high flow thermoplastic composition of any of claims 1 to 13, wherein the flow modifier polymer is substantially free of acrylonitrile monomer.

15. A molded article made from the high flow thermoplastic composition of any of claims 1 to 14.

16. The molded article of claim 15, wherein the article is an automobile part or a housing for a piece of electronic equipment.

17. The molded article of claim 15 or 16, wherein the article is selected from the group consisting of a housing for a computer, a computer monitor, a keyboard, a printer, a fax machine, a telephone, a mobile communications device, such as a mobile phone, a camera, a power plug, an electrical switch, an electrical connector, an electrical control panel, a telecommunication connector, a telecommunication switch, an automobile control panel, an automobile indicator panel, a mount for a mirror, an automobile headlamp, an automotive bumper, automotive fascia, an automotive hood, an engine cover, a generator cover, a battery cover, an air manifold, automotive hoses and connectors, a tractor hood, an automotive panel, a tractor panel, a lawn mower deck, a lawn tool, a piece of office equipment, including a photocopier, a tray for a photocopier, household electronics, such as coffee makers, irons, vacuum cleaners, and fans, large appliances, such as televisions, DVD players, refrigerators, washing machines, and dryers; or parts for a computer, a computer monitor, a keyboard, a printer, a fax machine, a telephone, a mobile communications device, such as a mobile phone, a camera, a power plug, an electrical switch, an electrical connector, an electrical control panel, a telecommunication connector, a telecommunication switch, an automobile control panel, an automobile indicator panel, a mount for a mirror, an automobile headlamp, an automotive bumper, automotive fascia, an automotive hood, an engine cover, a generator cover, a battery cover, an air manifold, automotive hoses and connectors, a tractor hood, an automotive panel, a tractor panel, a lawn mower deck, a lawn tool, a piece of office equipment, including a photocopier, a tray for a photocopier, household electronics, such as coffee makers, irons, vacuum cleaners, and fans, large appliances, such as televisions, DVD players, refrigerators, washing machines, and dryers.

18. A method for increasing the flow of a host polymer comprising mixing a host polymer and a flow modifier polymer having a weight average molecular weight of less than 15,000, the flow modifier polymer comprising at least one vinyl aromatic monomer and at least one (meth)acrylate monomer,
wherein the said composition is **characterized by** a relative energy difference (R.E.D.) between the flow modifier polymer and the host polymer of less than 2.2, a melt flow index at least 5 percent higher than the host polymer, a notched Izod impact strength of no more than 40% less than the host polymer, a heat deflection temperature of no more than 10 °C less than the host polymer, a Vicat softening temperature of no more than 10 °C less than the host polymer, and the flow modifier polymer is not a diene-based graft polymer or another rubber based polymer.

19. The method of claim 18, wherein the host polymer is selected from the group consisting of polycarbonates, polycarbonate acrylonitrile-butadiene-styrene blends, polyamides, polyesters, polyphenylene ethers, transparent ABS resins, and combinations thereof.

20. The method of claim 19, wherein the host polymer is a polycarbonate.

21. The method of claim 20, wherein the host polymer is a polycarbonate/acrylonitrile-butadiene-styrene blend.

22. The method according to one of the claims 18 to 21, further comprising:

    molding the flow modified thermoplastic composition, wherein the mixing and molding steps have a maximum processing temperature of about 350 °C, and further wherein the flow modifier polymer undergoes a weight loss of less than about 10 % at the maximum processing temperature.

23. The method of claim 22, wherein the maximum processing temperature is at least 180 °C.

24. The method of claim 23, wherein the maximum processing temperature is between 180°C and 350 °C.

25. The method according to one of the claims 18 to 24, further comprising:

    molding the flow modified thermoplastic composition, wherein the mixing and molding steps are carried out at shear rates in excess of 100,000 sec$^{-1}$ without the incidence of additive juicing or delamination.

26. The method of claim 25, wherein a maximum shear rate in the mold is in excess of 300,000 sec$^{-1}$.

27. The method of claim 25, wherein a maximum shear rate in the mold is in excess of 500,000 sec$^{-1}$.

**Patentansprüche**

1. Eine thermoplastische Zusammensetzung mit hoher Fließfähigkeit, umfassend

    (a) ein Wirtspolymer,
    (b) ein Fließmodifikatorpolymer mit einem massegemittelten Molekulargewicht von weniger als 15.000, wobei das Modifikatorpolymer zumindest ein (Meth)acrylat-Monomer und zumindest ein aromatisches Vinylmonomer umfasst,

wobei die Zusammensetzung eine relative Energiedifferenz (R.E.D.) zwischen dem Fließmodifikator und dem Wirtspolymer von weniger als 2,2 aufweist, einen Schmelzindex aufweist, der mindestens 5 % höher ist als derjenige des Wirtspolymers, eine Izod-Kerbschlagzähigkeit aufweist, die um nicht mehr als 40 % geringer ist als diejenige des Wirtspolymers, eine Durchbiegetemperatur bei Belastung aufweist, die nicht mehr als 10 °C unterhalb derjenigen des Wirtspolymers liegt, und eine Vicat-Erweichungstemperatur aufweist, die nicht mehr als 10°C unterhalb derjenigen des Wirtspolymers liegt, und wobei es sich bei dem Fließmodifikatorpolymer nicht um ein Pfropfpolymer auf Dien-Basis oder ein anderes Polymer auf Gummibasis handelt.

2.  Die thermoplastische Zusammensetzung mit hoher Fließfähigkeit nach Anspruch 1, wobei das massegemittelte Molekulargewicht des Fließmodifikatorpolymers weniger als 10.000 beträgt.

3.  Die thermoplastische Zusammensetzung mit hoher Fließfähigkeit nach Anspruch 1, wobei das massegemittelte Molekulargewicht des Fließmodifikatorpolymers weniger als 5.000 beträgt.

4.  Die thermoplastische Zusammensetzung mit hoher Fließfähigkeit nach einem der Ansprüche 1 bis 3, wobei das Wirtspolymer aus der Gruppe bestehend aus Polycarbonaten, Gemischen von Polycarbonat/Acrylnitril-Butadien-Styrol, Polyamiden, Polyestern, Polyphenylenethern, transparenten ABS-Harzen, oder Kombinationen der vorstehend genannten Polymere ausgewählt wird.

5.  Die thermoplastische Zusammensetzung mit hoher Fließfähigkeit nach Anspruch 4, wobei das Wirtspolymer ein Polycarbonat ist.

6.  Die thermoplastische Zusammensetzung mit hoher Fließfähigkeit nach Anspruch 4, wobei das Wirtspolymer ein Gemisch von Polycarbonat/Acrylnitril-Butadien-Styrol ist.

7.  Die thermoplastische Zusammensetzung mit hoher Fließfähigkeit nach einem der Ansprüche 1 bis 3, wobei das Wirtspolymer aus der Gruppe der Polymere bestehend aus Polyamid, Polybutylenterephthalat, Polypropylenterephthalat, Polyethylenterephthalat, PETG, Polyethylennaphthalat, Polyphenylenoxid, oder Kombinationen der vorstehend genannten Polymere ausgewählt wird.

8.  Die thermoplastische Zusammensetzung mit hoher Fließfähigkeit nach einem der Ansprüche 1 bis 7, wobei das Wirtspolymer in einer Menge von 50 bis 99 Gew.-% vorliegt und das Fließmodifikatorpolymer in einer Menge von 1 bis 20 Gew.-% vorliegt.

9.  Die thermoplastische Zusammensetzung mit hoher Fließfähigkeit nach einem der Ansprüche 1 bis 8, das Fließmodifikatorpolymer umfassend:

    (b1) 1 bis 99 Gew.-% zumindest eines (Meth)acrylat-Monomers,
    (b2) 99 bis1 Gew.-% zumindest eines aromatischen Vinylmonomers,
    (b3) 0 bis 99 Gew.-% eines weiteren Monomers oder Monomergemisches, welches in der Lage ist, mit (b1) und (b2) zu copolymerisieren.

10. Die thermoplastische Zusammensetzung mit hoher Fließfähigkeit nach Anspruch 9, wobei das Fließmodifikatorpolymer 1 bis 70 Gew.-% zumindest eines (Meth)acrylat-Monomers und 99 bis 30 Gew.-% zumindest eines aromatischen Vinylmonomers umfasst.

11. Die thermoplastische Zusammensetzung mit hoher Fließfähigkeit nach einem der Ansprüche 1 bis 10, wobei es sich bei der Zusammensetzung um eine transparente Zusammensetzung handelt, die einen prozentualen Trübungswert aufweist, der um weniger als etwa 1 % vom prozentualen Trübungswert des Wirtspolymers differiert.

12. Die thermoplastische Zusammensetzung mit hoher Fließfähigkeit nach einem der Ansprüche 1 bis 11, weiterhin umfassend zumindest ein Additiv, wobei es sich bei dem Additiv um einen schlagzäh machenden Zusatzstoff, einen mineralischen Füllstoff, ein Pigment, einen Farbstoff oder ein Flammschutzmittel handelt.

13. Die thermoplastische Zusammensetzung mit hoher Fließfähigkeit nach einem der Ansprüche 1 bis 12, wobei das aromatische Vinylmonomer Styrol oder ein Styrolderivat ist und das (Meth)acrylat-Monomer aus der Gruppe bestehend aus Butylmethacrylat, Methylmethacrylat, Glycidylmethacrylat, Butylacrylat, 2-Ethylhexylacrylat, Ethylacrylat, Acrylsäure und Maleinsäureanhydrid ausgewählt wird.

14. Die thermoplastische Zusammensetzung mit hoher Fließfähigkeit nach einem der Ansprüche 1 bis 13, wobei das Fließmodifikatorpolymer im Wesentlichen frei von Acrylnitrilmonomeren ist.

15. Ein Formkörper, hergestellt aus der thermoplastischen Zusammensetzung mit hoher Fließfähigkeit nach einem der Ansprüche 1 bis 14.

16. Der Formkörper nach Anspruch 15, wobei der Körper Teil eines Automobils oder eines Gehäuses für ein elektronisches Gerät ist.

17. Der Formkörper nach Anspruch 15 oder 16, wobei der Körper aus der Gruppe bestehend aus einem Computergehäuse, einem Computermonitor, einer Tastatur, einem Drucker, einem Faxgerät, einem Telefon, einer mobilen Kommunikationsvorrichtung wie z.B. einem Mobiltelefon, einer Kamera, einem Netzstecker, einem elektrischen Schalter, einer elektrischen Steckverbindung, einer elektrischen Bedienungskonsole, einem Telekommunikationsanschluss, einem Schalter für die Telekommunikation, einer Instrumententafel im Automobil, einer Anzeigetafel im Automobil, einer Spiegelhalterung, einem Fahrzeugscheinwerfer, einer Stoßstange eines Automobils, einem Armaturenbrett, einer Motorhaube, einer Motorabdeckung, einer Generatorabdeckung, einer Batterieabdeckung, einem Luftverteiler, Schläuchen und Verbindungsstücken für Fahrzeuge, einer Traktorhaube, einer Fahrzeugbedienungskonsole, einer Traktorbedienungskonsole, einem Rasenmäherverdeck, einem Rasenmäherwerkzeug, Büroausstattung einschließlich einem Photokopierer, einem Einsatz für einen Photokopierer, elektronischen Haushaltsgeräten wie Kaffeemaschinen, Bügeleisen, Staubsaugern und Ventilatoren, Großgeräten wie Fernsehern, DVD-Spielern, Kühlschränken, Waschmaschinen und Trocknern; oder Teilen eines Computers, eines Computermonitors, einer Tastatur, eines Druckers, eines Faxgeräts, eines Telefons, einer mobilen Kommunikationsvorrichtung wie z.B. eines Mobiltelefons, einer Kamera, eines Netzstekkers, eines elektrischen Schalters, einer elektrischen Steckverbindung, einer elektrischen Bedienungskonsole, eines Telekommunikationsanschlusses, eines Schalters für die Telekommunikation, einer Instrumententafel im Automobil, einer Anzeigetafel im Automobil, einer Spiegelhalterung, eines Fahrzeugscheinwerfers, einer Stoßstange eines Automobils, eines Armaturenbretts, einer Motorhaube, einer Motorabdeckung, einer Generatorabdeckung, einer Batterieabdeckung, eines Luftverteilers, von Schläuchen und Verbindungsstücken für Fahrzeuge, einer Traktorhaube, einer Fahrzeugbedienungskonsole, einer Traktorbedienungskonsole, eines Rasenmäherverdecks, eines Rasenmäherwerkzeugs, von Büroausstattung einschließlich eines Photokopierers, eines Einsatzes für einen Photokopierer, von elektronischen Haushaltsgeräten wie Kaffeemaschinen, Bügeleisen, Staubsaugern und Ventilatoren, von Großgeräten wie Fernsehern, DVD-Spielern, Kühlschränken, Waschmaschinen und Trocknern ausgewählt wird.

18. Ein Verfahren zur Erhöhung der Fließfähigkeit eines Wirtspolymers, umfassend das Mischen eines Wirtspolymers und eines Fließmodifikatorpolymers mit einem massegemittelten Molekulargewicht von weniger als 15.000, wobei das Fließmodifikatorpolymer zumindest ein aromatisches Vinylmonomer und zumindest ein (Meth)acrylat-Monomer umfasst, und wobei die Zusammensetzung eine relative Energiedifferenz (R.E.D.) zwischen dem Fließmodifikator und dem Wirtspolymer von weniger als 2,2 aufweist, einen Schmelzindex aufweist, der mindestens 5 % höher ist als derjenige des Wirtspolymers, eine Izod-Kerbschlagzähigkeit aufweist, die um nicht mehr als 40 % geringer ist als diejenige des Wirtspolymers, eine Durchbiegetemperatur bei Belastung aufweist, die nicht mehr als 10 °C unterhalb derjenigen des Wirtspolymers liegt, und eine Vicat-Erweichungstemperatur aufweist, die nicht mehr als 10°C unterhalb derjenigen des Wirtspolymers liegt, und wobei es sich bei dem Fließmodifikatorpolymer nicht um ein Pfropfpolymer auf Dien-Basis oder ein anderes Polymer auf Gummibasis handelt.

19. Das Verfahren nach Anspruch 18, wobei das Wirtspolymer aus der Gruppe bestehend aus Polycarbonaten, Gemischen von Polycarbonat/Acrylnitril-Butadien-Styrol, Polyamiden, Polyestern, Polyphenylenethern, transparenten ABS-Harzen, oder Kombinationen der vorstehend genannten Polymere ausgewählt wird.

20. Das Verfahren nach Anspruch 19, wobei das Wirtspolymer ein Polycarbonat ist.

21. Das Verfahren nach Anspruch 20, wobei das Wirtspolymer ein Gemisch von Polycarbonat/Acrylnitril-Butadien-Styrol ist.

22. Das Verfahren nach einem der Ansprüche 18 bis 21, weiterhin umfassend eine Formgebung der in ihrer Fließfähigkeit modifizierten thermoplastischen Zusammensetzung, wobei die maximale Verarbeitungstemperatur während des Mischens und der Formgebung etwa 350°C beträgt und das Fließmodifikatorpolymer bei der maximalen Verarbeitungstemperatur einen Gewichtsverlust von weniger als etwa 10 % erfährt.

23. Das Verfahren nach Anspruch 22, wobei die maximale Verarbeitungstemperatur mindestens 180°C beträgt.

24. Das Verfahren nach Anspruch 23, wobei die maximale Verarbeitungstemperatur zwischen 180 °C und 350 °C liegt.

25. Das Verfahren nach einem der Ansprüche 18 bis 24, weiterhin umfassend eine Formgebung der in ihrer Fließfähigkeit modifizierten thermoplastischen Zusammensetzung, wobei die Schritte des Mischens und der Formgebung bei einer Scherrate von mehr als 100.000 s$^{-1}$ ohne das Auftreten eines Additiv-Juicings oder einer Schichtentrennung durchgeführt werden.

26. Das Verfahren nach Anspruch 25, wobei die maximale Scherrate in der Form mehr als 300.000 s$^{-1}$ beträgt.

27. Das Verfahren nach Anspruch 25, wobei die maximale Scherrate in der Form mehr als 500.000 s$^{-1}$ beträgt.


**Revendications**

1. Composition thermoplastique à haute fluidité comprenant :

   (a) un polymère hôte ; et
   (b) un polymère modificateur de fluidité ayant un poids moléculaire moyen en poids inférieur à 15 000, le polymère modificateur comprenant au moins un monomère (méth)acrylate et au moins un monomère aromatique vinylique,

   dans laquelle ladite composition est **caractérisée par** une différence d'énergie relative (R.E.D.) entre le polymère modificateur de fluidité et le polymère hôte inférieure à 2,2, un indice de fluidité au moins 5 pour-cent plus élevé que le polymère hôte, une résistance au choc Izod sur barreau entaillé non supérieure à 40 % de moins que le polymère hôte, une température de fléchissement thermique non supérieure à 10 °C de moins que le polymère hôte, et une température de ramollissement Vicat non supérieure à 10 °C de moins que le polymère hôte, et le polymère modificateur de fluidité n'est pas un polymère greffé à base de diène ou un autre polymère à base de caoutchouc.

2. Composition thermoplastique à haute fluidité selon la revendication 1, dans laquelle le poids moléculaire moyen en poids du polymère modificateur de fluidité est inférieur à 10 000.

3. Composition thermoplastique à haute fluidité selon la revendication 1, dans laquelle le poids moléculaire moyen en poids du polymère modificateur de fluidité est inférieur à 5 000.

4. Composition thermoplastique à haute fluidité selon l'une quelconque des revendications 1 à 3, dans laquelle le polymère hôte est choisi parmi le groupe constitué de polycarbonates, de mélanges de polycarbonate/acrylonitrile-butadiène-styrène, de polyamides, de polyesters, d'éthers de polyphénylène, de résines ABS transparentes, et de combinaison de ceux-ci.

5. Composition thermoplastique à haute fluidité selon la revendication 4, dans laquelle le polymère hôte est un polycarbonate.

6. Composition thermoplastique à haute fluidité selon la revendication 4, dans laquelle le polymère hôte est un mélange de polycarbonate/acrylonitrile-butadiène-styrène.

7. Composition thermoplastique à haute fluidité selon l'une quelconque des revendications 1 à 3, dans laquelle le polymère hôte est choisi parmi le groupe de polymères constitué de polyamide, de poly(butylène téréphtalate), de poly(propylène téréphtalate), de poly(éthylène téréphtalate), de PETG, de polyéthylène naphtalate, d'oxyde de polyphénylène, et de combinaisons de ceux-ci.

8. Composition thermoplastique à haute fluidité selon l'une quelconque des revendications 1 à 7, dans laquelle le polymère hôte est présent dans une quantité de 50 à 99 pour-cent en poids et le polymère modificateur de fluidité est présent dans une quantité de 1 à 20 pour-cent en poids.

9. Composition thermoplastique à haute fluidité selon l'une quelconque des revendications 1 à 8, dans laquelle le polymère modificateur de fluidité comprend

   (b1) 1 à 99 % d'au moins un monomère (méth)acrylate,
   (b2) 99 à 1 % d'au moins un monomère aromatique vinylique, et
   (b3) 0 à 99 % d'un autre monomère ou mélange de monomères capable de copolymériser avec (b1) et (b2).

10. Composition thermoplastique à haute fluidité selon la revendication 9, dans laquelle le polymère modificateur de fluidité comprend de 1 à 70 pour-cent en poids d'au moins un monomère (méth)acrylate et de 99 à 30 pour-cent en poids d'au moins un monomère aromatique vinylique.

11. Composition thermoplastique à haute fluidité selon l'une quelconque des revendications 1 à 10, dans laquelle la composition est une composition transparente ayant un pourcentage de turbidité qui diffère de moins d'environ 1 % du pourcentage de turbidité du polymère hôte.

12. Composition thermoplastique à haute fluidité selon l'une quelconque des revendications 1 à 11, comprenant en outre au moins un additif, dans laquelle l'additif est un modificateur d'impact, une charge minérale, un pigment, un colorant ou un retardateur d'incendie.

13. Composition thermoplastique à haute fluidité selon l'une quelconque des revendications 1 à 12, dans laquelle le au moins un monomère aromatique vinylique est du styrène ou un dérivé du styrène, et le au moins un monomère (méth)acrylate est choisi parmi le groupe constitué du méthacrylate de butyle, du méthacrylate de méthyle, de méthacrylate de glycidyle, d'acrylate de butyle, d'acrylate de 2-éthylhexyle, d'acrylate d'éthyle, d'acide acrylique et d'anhydride maléique.

14. Composition thermoplastique à haute fluidité selon l'une quelconque des revendications 1 à 13, dans laquelle le polymère modificateur de fluidité est sensiblement exempt de monomère d'acrylonitrile.

15. Article moulé fabriqué à partir de la composition thermoplastique à haute fluidité selon l'une quelconque des revendications 1 à 14.

16. Article moulé selon la revendication 15, dans lequel l'article est une pièce automobile ou un boîtier pour une pièce d'équipement électronique.

17. Article moulé selon la revendication 15 ou 16, dans lequel l'article est choisi parmi le groupe constitué des éléments suivants : un boîtier pour un ordinateur, un moniteur informatique, un clavier, une imprimante, un télécopieur, un téléphone, un dispositif de communication mobile tel qu'un téléphone mobile, un appareil photo, une prise de courant, un interrupteur électrique, un connecteur électrique, un panneau de commande électrique, un connecteur de télécommunications, un commutateur de télécommunications, un panneau de commande automobile, un panneau de voyants automobile, une monture de miroir, un phare automobile, un pare-chocs automobile, un carénage automobile, un capot automobile, un couvercle de moteur, un couvercle de générateur, un couvercle de batterie, un collecteur d'air, des tuyaux et des connecteurs automobiles, un capot de tracteur, un panneau automobile, un panneau de tracteur, un châssis de tondeuse à gazon, un outil de jardin, un équipement bureautique incluant un photocopieur, un bac pour un photocopieur, des appareils électroniques domestiques tels que des cafetières, des fers à repasser, des aspirateurs et des ventilateurs, de gros appareils tels que des téléviseurs, des lecteurs DVD, des réfrigérateurs, des machines à laver et des séchoirs ; ou des pièces pour un ordinateur, un moniteur informatique, un clavier, une imprimante, un télécopieur, un téléphone, un dispositif de communication mobile tel qu'un téléphone mobile, un appareil photo, une prise de courant, un interrupteur électrique, un connecteur électrique, un panneau de commande électrique, un connecteur de télécommunications, un commutateur de télécommunications, un panneau de commande automobile, un panneau de voyants automobile, une monture de miroir, un phare automobile, un pare-chocs automobile, un carénage automobile, un capot automobile, un couvercle de moteur, un couvercle de générateur, un couvercle de batterie, un collecteur d'air, des tuyaux et des connecteurs automobiles, un capot de tracteur, un panneau automobile, un panneau de tracteur, un châssis de tondeuse à gazon, un outil de jardin, un équipement bureautique incluant un photocopieur, un bac pour un photocopieur, des appareils électroniques domestiques tels que des cafetières, des fers à repasser, des aspirateurs et des ventilateurs, de gros appareils tels que des téléviseurs, des lecteurs DVD, des réfrigérateurs, des machines à laver et des séchoirs.

**18.** Procédé pour augmenter la fluidité d'un polymère hôte, comprenant l'étape de mélanger un polymère hôte et un polymère modificateur de fluidité ayant un poids moléculaire moyen en poids inférieur à 15 000, le polymère modificateur de fluidité comprenant au moins un monomère aromatique vinylique et au moins un monomère (méth) acrylate,

dans lequel ladite composition est **caractérisée par** une différence d'énergie relative (R.E.D.) entre le polymère modificateur de fluidité et le polymère hôte inférieure à 2,2, un indice de fluidité au moins 5 pour-cent plus élevé que le polymère hôte, une résistance au choc Izod sur barreau entaillé non supérieure à 40 % de moins que le polymère hôte, une température de fléchissement thermique non supérieure à 10 °C de moins que le polymère hôte, et une température de ramollissement Vicat non supérieure à 10 °C de moins que le polymère hôte, et le polymère modificateur de fluidité n'est pas un polymère greffé à base de diène ou un autre polymère à base de caoutchouc.

**19.** Procédé selon la revendication 18, dans lequel le polymère hôte est choisi parmi le groupe constitué de polycarbonates, de mélanges de polycarbonate/acrylonitrile-butadiène-styrène, de polyamides, de polyesters, d'éthers de polyphénylène, de résines ABS transparentes, et de combinaison de ceux-ci.

**20.** Procédé selon la revendication 19, dans lequel le polymère hôte est un polycarbonate.

**21.** Procédé selon la revendication 20, dans lequel le polymère hôte est un mélange de polycarbonate/acrylonitrile-butadiène-styrène.

**22.** Procédé selon l'une des revendications 18 à 21, comprenant en outre l'étape de :

mouler la composition thermoplastique à fluidité modifiée, dans lequel les étapes de mélanger et de mouler ont une température de traitement maximale d'environ 350 °C, et en outre dans lequel le polymère modificateur de fluidité subit une perte de poids inférieure à environ 10 % à la température de traitement maximale.

**23.** Procédé selon la revendication 22, dans lequel la température de traitement maximale est au moins de 180 °C.

**24.** Procédé selon la revendication 23, dans lequel la température de traitement maximale est entre 180 °C et 350 °C.

**25.** Procédé selon l'une des revendications 18 à 24, comprenant en outre l'étape de :

mouler la composition thermoplastique à fluidité modifiée, dans lequel les étapes de mélanger et de mouler sont exécutées à des vitesses de cisaillement dépassant 100 000 s$^{-1}$ sans l'incidence d'un jutage additionnel ou d'un délaminage.

**26.** Procédé selon la revendication 25, dans lequel une vitesse de cisaillement maximale dans le moule dépasse 300 000 s$^{-1}$.

**27.** Procédé selon la revendication 25, dans lequel une vitesse de cisaillement maximale dans le moule dépasse 500 000 s$^{-1}$.

# EP 1 570 001 B1

### Patent documents cited in the description

- US 60432269 B
- JP 1186312 A
- US 4740553 A
- JP 2000129135 A
- US 2071250 A
- US 2071251 A
- US 2130523 A
- US 2130948 A
- US 2241322 A
- US 2312966 A
- US 2512606 A
- US 6605681 B
- US 354350 A

### Non-patent literature cited in the description

- Polymer Handbook. 675-688
- **Hansen ; C. M. Hansen.** Solubility Parameters - A Users Handbook. CRC Press, 2000, 1-13
- **C. M. Hansen.** Hansen Solubility Parameters - A Users Handbook. CRC Press, 2000, 1-13
- **C. M. Hansen.** Hansen Solubility Parameters - A Users Handbook. CRC Press, 2000, 1-13